# EUROPÄISCHE PATENTSCHRIFT

(11) **EP 3 762 566 B1**
(45) Veröffentlichungstag und Bekanntmachung des Hinweises auf die Patenterteilung: **20.08.2025**
(21) Anmeldenummer: 19715806.6
(22) Anmeldetag: 06.03.2019
(51) Int. Cl.: E04G 11/48, E04G 17/16, E01D 21/00, E04G 13/06, E04G 5/06, E01D 21/06

(54) **VERFAHREN ZUM VERSCHIEBEN EINER DECKENSCHALUNG, AUFFAHRSCHUTZELEMENT SOWIE DECKENSCHALUNG, STÜTZVORRICHTUNG UND TAKTSCHIEBEVORRICHTUNG MIT EINEM SOLCHEN AUFFAHRSCHUTZELEMENT**
METHOD FOR DISPLACING A CEILING FORMWORK, COLLISION PROTECTION ELEMENT, AND CEILING FORMWORK, SUPPORTING DEVICE AND INCREMENTAL LAUNCHING DEVICE COMPRISING SUCH A COLLISION PROTECTION ELEMENT
PROCÉDÉ POUR DÉPLACER UN COFFRAGE DE DALLE, ÉLÉMENT ANTI-TAMPONNAGE AINSI QUE COFFRAGE DE DALLE, DISPOSITIF SUPPORT ET DISPOSITIF DE DÉPLACEMENT PAR CYCLE PRÉSENTANT UN TEL ÉLÉMENT ANTI-TAMPONNAGE

(30) Priorität: 09.03.2018 DE 102018203612
(43) Veröffentlichungstag der Anmeldung: 13.01.2021
(73) Patentinhaber: PERI SE, 89264 Weißenhorn (DE)
(72) Erfinder: STURM, Florian, 89299 Unterroth (DE)
(74) Vertreter: K & H Bonapat Patentanwälte Koch · von Behren & Partner mbB
(86) Internationale Anmeldenummer: PCT/DE2019/100202
(87) Internationale Veröffentlichungsnummer: WO 2019/170197

(56) Entgegenhaltungen:
- DE-A1- 102015 223 762
- DE-A1- 102015 223 762
- DE-A1- 3 527 470
- DE-A1- 3 527 470
- DE-B3- 102007 023 083
- DE-B3- 102007 023 083
- GB-A- 921 364
- KR-A- 20070 001 483
- KR-A- 20070 001 483
- US-A- 3 797 793
- US-A- 3 797 793

## Beschreibung

Die Erfindung betrifft ein Verfahren zum Verschieben einer Deckenschalung in einen nächsten Betoniertakt mit einem zu betonierenden nächsten Betonierabschnitt, bei dem in einer Verschieberichtung nebeneinander angeordnete erste und zweite Stützvorrichtungen zur Stützung der Deckenschalung unterhalb des nächsten Betonierabschnittes angeordnet werden. Weiter betrifft die Erfindung eine Anordnung umfassend ein Auffahrschutzelement zum Vermeiden eines Auffahrens einer Stirnseite einer Deckenschalung und Taktschiebevorrichtung mit einem solchen Auffahrschutzelement.

Beim Taktschiebeverfahren, das beispielsweise im Brückenbau Anwendung findet, wird u.a. eine Deckenschalung von einem vorherigen Betoniertakt in einen nächsten Betoniertakt verzogen bzw. zu verschoben. Eine vorhandene Deckenschalung wird hierzu ausgeschalt, also von einem zum Betonieren erforderlichen Betonierniveau abgesenkt, horizontal verzogen bzw. verschoben in den nächsten Betoniertakt und anschließend auf das erforderliche Betonierniveau hochgedrückt bzw. angehoben und eingerichtet. Das Anheben und Einrichten der Deckenschalung wird auch als Einschalen bezeichnet und findet bekanntermaßen mithilfe von Stockwinden und/oder Baustützen und/oder Spindelvorrichtungen statt, um das Betonierniveau zu erreichen und zu halten. Gerade im Randbereich eines Brückentrogs ist jedoch die Zugänglichkeit für eine Höheneinstellung aufgrund geneigter Wände schlecht, was das Einschalen für den Arbeiter auf der Baustelle arbeitsaufwendig und zeitintensiv und damit für den Auftraggeber bzw. Bauträger kostenintensiv macht.

Das Dokument DE 3527470 A1 offenbart ein Verfahren zum Verschieben einer Deckenschalung. Das Dokument DE 102015223762 A1 offenbart eine Anordnung zur Herstellung eine Betondecke.

Aufgabe der vorliegenden Erfindung ist es demgegenüber, ein Verfahren zum Verschieben einer Deckenschalung bereitzustellen, mit dem unter Vermeidung des beschriebenen Nachteils des Standes der Technik das Anheben und Einrichten der Deckenschalung vereinfacht und beschleunigt wird. Zudem soll mit dem Verfahren ohne Erhöhung einer Anzahl notwendiger Hilfsmittel wie Stockwinden ein vorhandenes Fehlerpotenzial beim Einschalen reduziert werden.

Diese Aufgabe wird erfindungsgemäß durch ein Verfahren zum Verschieben einer Deckenschalung in einen nächsten Betoniertakt gemäß Anspruch 1, eine Anordnung gemäß Anspruch 14 und auch gemäß Anspruch 16, sowie eine Taktschiebevorrichtung gemäß Anspruch 17 gelöst. Die Unteransprüche geben bevorzugte Weiterbildungen wieder.

Die erfindungsgemäße Aufgabe wird somit gelöst durch ein Verfahren zum Verschieben einer Deckenschalung in einen nächsten Betoniertakt mit einem zu betonierenden nächsten Betonierabschnitt, bei dem entlang einer Verschieberichtung, insbesondere an einer Seitenwand, beispielsweise eines Randbereichs eines Brückentrogs, angeordnete erste und zweite Stützvorrichtungen zur Stützung der Deckenschalung unterhalb des nächsten Betonierabschnittes angeordnet werden, die jeweils als Arbeitspositionen eine Einschalposition und eine Ausschalposition aufweisen, wobei bei Stützung der Deckenschalung durch die Stützvorrichtung in der Einschalposition die Deckenschalung auf ein Betonierniveau angehoben ist und in der Ausschalposition relativ zu dem Betonierniveau abgesenkt ist. Die erste Stützvorrichtung wird in die Ausschalposition versetzt bzw. gebracht und die zu der ersten Stützvorrichtung in Richtung der Verschieberichtung angeordnete zweite Stützvorrichtung wird in die Einschalposition versetzt bzw. gebracht. Es folgt ein Anordnen eines Auffahrschutzelementes zwischen der zweiten Stützvorrichtung und einer Stirnseite der Deckenschalung bei Auftreffen der Stirnseite der Deckenschalung nach Überfahren der ersten Stützvorrichtung auf die zweite Stützvorrichtung, so dass das Auffahrschutzelement eine in Verschieberichtung ansteigende Flanke zur Führung der Deckenschalung in Verschieberichtung ausbildet, und ein Anheben der Stirnseite der Deckenschalung geführt durch das Auffahrschutzelement auf das Betonierniveau, so dass die zweite Stützvorrichtung von der Deckenschalung überfahren wird.

Erfindungsgemäß werden also unterhalb des zu betonierenden nächsten Betonierabschnittes im nächsten Betoniertakt zumindest zwei Stützvorrichtungen entlang der Verschieberichtung angeordnet, wobei sich die erste Stützvorrichtung in der Ausschalposition und die in Verschieberichtung unmittelbar oder mittelbar neben der ersten Stützvorrichtung angeordnete zweite Stützvorrichtung in der Einschalposition befindet, bevor die Deckenschalung die zweite Stützvorrichtung überfahren hat. Die ersten und zweiten Stützvorrichtungen können benachbart zueinander angeordnet werden, oder zwischen den ersten und zweiten Stützvorrichtungen kann zumindest eine andere Stützvorrichtung angeordnet wird, wobei die andere Stützvorrichtung in die Ausschalposition oder in eine Position zwischen die Ausschalposition und die Einschalposition (EP) versetzt wird. Zwischen den ersten und zweiten Stützvorrichtungen können also eine oder mehrere andere Stützvorrichtungen angeordnet sein. Auch können die eine oder mehreren anderen Stützvorrichtungen jeweils in die Ausschalposition versetzt sein. Die eine oder mehreren anderen Stützvorrichtungen können auch in eine Position zwischen die Ausschalposition und die Einschalposition versetzt auf gleicher Höhe versetzt sein. Das Auffahrschutzelement wird dann zwischen der in der Verschieberichtung zu der ersten Stützvorrichtung benachbart angeordneten Stützvorrichtung und einer Stirnseite der Deckenschalung bei Auftreffen der Stirnseite der Deckenschalung nach Überfahren der ersten Stützvorrichtung angeordnet. Das Auffahrschutzelement wird zudem zwischen der zweiten Stützvorrichtung und einer Stirnseite der Deckenschalung bei Auftreffen der Stirnseite der Deckenschalung nach Überfahren der zu der zweiten Stützvorrichtung in zu der Verschieberichtung entgegengesetzter Richtung benachbarten anderen Stützvorrichtung angeordnet.

Auch eine in die Verschieberichtung ansteigende Rampe aus mehreren anderen Stützvorrichtungen mit Positionen zwischen der Ausschalposition und der Einschalposition auf unterschiedlichen Höhen ist möglich, wobei in diesem Fall das Auffahrschutzelement zwischen jeder anderen Stützvorrichtung und einer Stirnseite der Deckenschalung bei Auftreffen der Stirnseite der Deckenschalung nach Überfahren der zu dieser anderen Stützvorrichtung in zu der Verschieberichtung entgegengesetzten Richtung benachbarten anderen Stützvorrichtung angeordnet. Das Auffahrschutzelement kann hierbei an der Stirnseite der Deckenschalung und/oder an jeder der Stützvorrichtungen jeweils in und/oder entgegen der Verschieberichtung angeordnet sein. Die in Verschieberichtung ansteigende Flanke überstreicht einen Höhenunterschied, der zumindest dem Höhenunterschied aufgrund unterschiedlicher Positionen entspricht, der zwischen benachbarten Stützvorrichtungen auftritt. Wenn die in Verschieberichtung ansteigende Flanke einen Höhenunterschied überstreicht, der zumindest einem Höhenunterschied zwischen der Ausschalposition und der Einschalposition entspricht, kann das Auffahrschutzelement bei jedem Höhenunterschied zwischen benachbarten Stützvorrichtungen eingesetzt werden.

Die Einschalposition und die Ausschalposition können von der Stützvorrichtung mittels einer an einem Trägerelement der Stützvorrichtung angeordneten Absenkeinrichtung als Teil der Stützvorrichtung, die ausgebildet ist, die Deckenschalung relativ zu der Stützvorrichtung ohne Absenkeinrichtung in der Höhe zu verschieben, eingenommen werden. Alternativ oder zusätzlich kann jede dieser Positionen durch Einstellen einer variablen Länge eines im Stützzustand zumindest teilweise vertikal ausgerichteten Trägerelementes, beispielsweise in Form eines Teleskops, einer Spindel oder einer Hubvorrichtung, der Stützvorrichtung erfolgen.

Sofern weitere Stützvorrichtungen im bisherigen Betoniertakt sich in der Ausschalposition befinden, um die Deckenschalung in den nächsten Betoniertakt verschieben zu können, würde die Stirnseite der Deckenschalung in Verschieberichtung, die die erste Stützvorrichtung in der Ausschalposition überfahren hat, auf die zweite Stützvorrichtung auffahren, da sich diese Stützvorrichtung in der Einschalposition befindet und im Gegensatz zu den anderen Stützvorrichtungen, die relativ zu dem Betonierniveau abgesenkt sind, auf das Betonierniveau angehoben ist. Dieses Auffahren auf die zweite Stützvorrichtung wird vermieden durch Platzierung eines Auffahrschutzelementes zwischen die zweite Stützvorrichtung und die Stirnseite der Deckenschalung zum Zeitpunkt des Auftreffens der Stirnseite der Deckenschalung auf die zweite Stützvorrichtung, indem das Auffahrschutzelement eine in Verschieberichtung ansteigende Flanke zur Führung der Deckenschalung in Verschieberichtung ausbildet, was ein Anheben der Stirnseite der Deckenschalung durch das Auffahrschutzelement auf das Betonierniveau erlaubt. Die Stirnseite der Deckenschalung weicht also der zweiten Stützvorrichtung nach oben aus und überfährt daher die zweite Stützvorrichtung. Die Stützvorrichtungen können manuell und/oder mittels elektrischer, pneumatischer und/oder hydraulischer Kafteinleitung in die Einschal- und Ausschalpositionen als Arbeitspositionen versetzt werden.

Eine Kollision der Stirnseite der Deckenschalung mit der zweiten Stützvorrichtung wird also beim Verschieben der Deckenschalung bewusst in Kauf genommen und ein Auffahren auf die zweite Stützvorrichtung derart, dass die Stirnseite der Deckenschalung von der zweiten Stützvorrichtung gestoppt wird, durch das Anordnen des Auffahrschutzelementes mit in Verschieberichtung ansteigender Flanke bei der Kollision vermieden. Stattdessen wird durch die Führung des Auffahrschutzelementes die Deckenschalung bei der Kollision angehoben und die Stirnseite der Deckenschalung auf das Betonierniveau angehoben, so dass die zweite Stützvorrichtung von der Deckenschalung überfahren wird. Dieses Verfahren erlaubt also ein Anheben zumindest eines Teils der Deckenschalung mit der Stirnseite in Verschieberichtung auf das Betonierniveau noch vor Abschluss des Verschiebens der Deckenschalung in den nächsten Betoniertakt. Statt erst nach Abschluss eines horizontalen Verschiebens in den nächsten Betoniertakt, also einer vollständigen Verschiebung der Deckenschalung unterhalb des nächsten zu betonierenden Betonierabschnittes, die Deckenschalung auf das erforderliche Betonierniveau anzuheben und einzurichten, also einzuschalen, wird unmittelbar mit der horizontalen Verschiebung mit dem Einschalen begonnen. Dieses Vorgehen beschleunigt gegenüber dem bekannten Aus- und Einschalen den Bauablauf und reduziert ein vorhandenes Fehlerpotenzial insofern, als das beim Anheben der Stirnseite der Deckenschalung auf das Betonierniveau im letzten Verfahrensschritt im Gegensatz zum Stand der Technik kein zusätzlicher Eingriff durch einen Bauarbeiter erfolgen muss.

Stattdessen erfolgt die Anhebung auf das Betonierniveau durch das Überfahren der zweiten Stützvorrichtung mittels des Auffahrschutzelementes. Die Horizontalbewegung der Deckenschalung in Verschieberichtung wird also durch das Auffahrschutzelement bei der Kollision der Deckenschalung mit der zweiten Stützvorrichtung teilweise in eine Vertikalbewegung zur Anhebung auf das Betonierniveau umgewandelt. Dies spart Zeit und zumindest zum Teil ein der Horizontalbewegung ansonsten separat nachfolgendes Anheben und Einrichten der Deckenschalung. Da lediglich die ohnehin vorhandenen Stützvorrichtungen verwendet werden können, sind auch keine zusätzlichen Hilfsmittel wie Stockwinden, Wagenheber etc. erforderlich. Durch die erfindungsgemäße Kombination der zweiten Stützvorrichtung in der Einschalposition bereits vor dem Einschalen mit dem Auffahrschutzelement und der Stirnseite der Deckenschalung zum Zeitpunkt der Kollision der Deckenschalung mit der zweiten Stützvorrichtung kann also das Einschalen der Deckenschalung vereinfacht und beschleunigt werden.

Bei der Deckenschalung kann es sich um eine bekannte Deckenschalung handeln, bei der das Auffahrschutzelement beispielsweise an der Stirnseite in Verschieberichtung befestigt ist. Alternativ oder zusätzlich kann das Auffahrschutzelement auch einenends an der zweiten Stützvorrichtung und ggf. weiteren Stützvorrichtungen angebracht werden. Eine Nachrüstung vorhandener Deckenschalungen und/oder Stützvorrichtungen mit dem Auffahrschutzelement zur Ausführung des erfindungsgemäßen Verfahrens zur Verschiebung der Deckenschalung ist daher problemlos möglich.

Vorteilhafterweise wird durch das Verschieben der Deckenschalung in den nächsten Betoniertakt die Deckenschalung zumindest teilweise auf das Betonierniveau angehoben, so dass nicht nur die Stirnseite in Verschieberichtung, sondern ein größerer Teil der Deckenschalung sich auf Betonierniveau befindet. Hierdurch sinkt der Aufwand des Einschalens des restlichen Teils der Deckenschalung, die sich (noch) nicht auf dem Betonierniveau, sondern darunter abgesenkt, befindet.

Wenn nach Abschluss des Verschiebens Deckenschalung in den nächsten Betoniertakt die erste Stützvorrichtung in die Einschalposition versetzt wird, kann die Deckenschalung vollständig auf das Betonierniveau angehoben werden. Wenn nicht lediglich die ersten und zweiten Stützvorrichtungen die Deckenschalung unterhalb des nächsten Betonierabschnittes stützen, sondern weitere Stützvorrichtungen die Deckenschalung stützen, sind diese weiteren Stützvorrichtungen ebenfalls in die Einschalposition zu versetzen bzw. zu halten.

Die Vorteile des erfindungsgemäßen Verfahrens kommen besonders dann zur Geltung, wenn die Deckenschalung von einem ersten Betoniertakt mit einem zumindest teilweise betonierten ersten Betonierabschnitt in den nächsten Betoniertakt verschoben wird, wobei der nächste Betonierabschnitt zu dem ersten Betonierabschnitt in Verschieberichtung benachbart angeordnet wird, eine dritte Stützvorrichtung zur Stützung der Deckenschalung in zu der Verschieberichtung entgegengesetzter Richtung benachbart zu der ersten Stützvorrichtung unterhalb des ersten Betonierabschnittes angeordnet wird, die dritte Stützvorrichtung in die Ausschalposition versetzt wird, die Deckenschalung verschoben wird, indem die Deckenschalung zuerst zumindest teilweise von der dritten Stützvorrichtung gestützt wird, danach die erste Stützvorrichtung und danach die zweite Stützvorrichtung von der Stirnseite der Deckenschalung in Verschieberichtung überfahren wird, und das Verschieben der Deckenschalung in den nächsten Betonierabschnitt fortgesetzt wird, bis eine weitere, in zu der Verschieberichtung (VR) entgegengesetzter Richtung orientierte Stirnseite der Deckenschalung von der dritten Stützvorrichtung freigegeben wird oder lediglich ein die weitere Stirnseite der Deckenschalung umfassender Endabschnitt der Deckenschalung von der dritten Stützvorrichtung gestützt wird. Damit ist die Deckenschalung aus dem ersten Betonierabschnitt in den nächsten Betonierabschnitt verschoben und bereits teilweise auf das Betonierniveau angehoben. Wenn die erste Stützvorrichtung aus der Ausschal- in die Einschalposition versetzt ist und ggf. weitere Stützvorrichtungen in Verschiebrichtung neben der zweiten Stützvorrichtung in die Einschalposition versetzt sind, kann der nächste Betonierabschnitt betoniert werden. Wenn lediglich der die weitere Stirnseite der in den nächsten Betonierabschnitt verschobenen Deckenschalung umfassende Endabschnitt der Deckenschalung von der dritten Stützvorrichtung gestützt wird, kann die Deckenschalung an einem Endabschnitt der Unterseite des betonierten ersten Betonierabschnittes anliegen, um den nächsten Betonierabschnitt bündig zu dem betonierten ersten Betonierabschnitt betonieren zu können.

In Verschieberichtung können neben der zweiten Stützvorrichtung und/oder in zu der Verschieberichtung entgegengesetzter Richtung neben der ersten/dritten Stützvorrichtung weitere Stützvorrichtungen angeordnet werden, und vor dem Verschieben der Deckenschalung in den nächsten Betonierabschnitt können die in Verschieberichtung neben der zweiten Stützvorrichtung angeordneten weiteren Stützvorrichtungen in die Einschalposition versetzt werden und/oder die in zu der Verschieberichtung entgegengesetzter Richtung neben der zweiten Stützvorrichtung angeordneten weiteren Stützvorrichtungen können in die Ausschalposition versetzt werden. In diesem Fall kann mit der in den nächsten Betonierabschnitt verschobenen Deckenschalung der Betonierabschnitt betoniert werden, sobald die erste Stützvorrichtung in die Einschalposition versetzt ist.

Vorteilhafterweise wird das Auffahrschutzelement an der Stirnseite der Deckenschalung in Verschieberichtung und/oder an der weiteren Stirnseite der Deckenschalung in zu der Verschieberichtung entgegengesetzter Richtung mit in dieser Richtung ansteigender Flanke ausgebildet. Das Auffahrschutzelement kann beispielsweise an einem Längsträger der Deckenschalung, der von einer Rolle einer Stützvorrichtung gestützt wird, vorgesehen sein. Das Auffahrschutzelement bildet dann einen Abschluss des Längsträgers in Verschieberichtung und/oder in zu der Verschieberichtung entgegengesetzter Richtung. Das Auffahrschutzelement kann eine Breite aufweisen, die einer Breite des Längsträgers entspricht.

Wenn an eine Unterkante der Stirnseite und/oder der weiteren Stirnseite angrenzende Seite des Auffahrschutzelementes im Wesentlichen bündig zu der Unterkante der Stirnseite und/oder der weiteren Stirnseite angeordnet wird, ist ein Gleiten oder Abrollen der Deckenschalung auf der oder über die Stützvorrichtung gewährleistet.

Das Auffahrschutzelement kann alternativ oder zusätzlich zu einer Anbringung an der Deckenschalung an einem der Deckenschalung zugewandtem Ende von zumindest einer der Stützvorrichtungen ausgebildet sein. In diesem Fall muss an der Deckenschalung keine Modifikation zur Ausführung des erfindungsgemäßen Verfahrens vorgenommen werden.

Das Auffahrschutzelement ist mit Vorteil schnabelförmig, keilförmig, kufenförmig oder in Form einer Rampe als Voll- oder Hohlkörper ausgebildet. Eine einfache und kostengünstige Herstellung ist so gewährleistet.

Die Deckenschalung wird in einer Ausführungsform der Erfindung mit einem Schalhautelement, das eine Unterseite einer Fahrbahnplatte ausformt, versehen und die Stützvorrichtung wird als Fahrbahnplattenkonsole ausgeführt. Mit einer solchen Deckenschalung kann eine Unterseite einer Fahrbahnplatte auf effektive Weise ausgeformt werden.

Die Stützvorrichtung kann an einem der Deckenschalung zugewandtem Ende einen Stützkopf ausbildet, wobei der Stützkopf mit einer Rolle zur Anlage an einem Längsträger der Deckenschalung versehen wird. Die Deckenschalung kann dann auf der Rolle abrollend verschoben werden.

Die Stützvorrichtung wird vorteilhafterweise mit einer Absenkeinrichtung mit einem Hubkolben, einer Stützbasis und mit einer Arretiervorrichtung versehen, wobei der Hubkolben in der Stützbasis verschiebbar gelagert wird und von der Einschalposition in die Ausschalposition einschiebbar ausgeführt wird und mittels der Arretiervorrichtung in der herausgeschobenen Arbeitsposition arretierbar ausgeführt wird, wobei die Arretiervorrichtung mit einem Drehlager und einem Exzenterhebel versehen wird, wobei der Exzenterhebel in dem Drehlager drehbar befestigt wird und der Hubkolben und die Stützbasis in der Arbeitsposition (s.o.) über den Exzenterhebel gegeneinander abgestützt werden, und die Stützbasis und/oder der Hubkolben einenends den Stützkopf ausbilden. Diese Absenkeinrichtung erlaubt ein einfaches und zuverlässiges Anheben auf das Betonierniveau und Absenken relativ zu dem Betonierniveau, so dass die Stützvorrichtung die Einschal- und Ausschalposition erreicht und beibehält.

Die Erfindung umfasst auch eine Anordnung mit ersten und zweiten Stützvorrichtungen, einer Deckenschalung und einem Auffahrschutzelement zum Vermeiden eines Auffahrens einer Stirnseite einer Deckenschalung, wobei die Deckenschalung von einer in eine Ausschalposition gesetzten ersten Stützvorrichtung gestützt ist, auf eine in eine Einschalposition gesetzte zweite Stützvorrichtung beim Verschieben der Deckenschalung in einen nächsten Betoniertakt mit einem zu betonierenden nächsten Betonierabschnitt, wobei die zweite Stützvorrichtung in Richtung einer Verschieberichtung der Deckenschalung zu der ersten Stützvorrichtung angeordnet ist, wobei bei Stützung der Deckenschalung durch die Stützvorrichtung in der Einschalposition die Deckenschalung auf ein Betonierniveau angehoben ist und in der Ausschalposition relativ zu dem Betonierniveau abgesenkt ist, wobei bei Auftreffen der Stirnseite der Deckenschalung nach Überfahren der ersten Stützvorrichtung auf die zweite Stützvorrichtung das Auffahrschutzelement zwischen der zweiten Stützvorrichtung und einer Stirnseite der Deckenschalung so angeordnet ist, dass das Auffahrschutzelement eine in Verschieberichtung ansteigende Flanke, die beispielsweise schnabelförmig, keilförmig, kufenförmig oder in Form einer Rampe als Voll- oder Hohlkörper ausgebildet ist, zur Führung der Deckenschalung in Verschieberichtung aufweist, und ausgebildet ist, die Stirnseite der Deckenschalung auf das Betonierniveau anhebend derart zu führen, dass die zweite Stützvorrichtung von der Deckenschalung überfahren werden kann. Die Vorteile dieses Auffahrschutzelementes entsprechen denjenigen, die bereits im Zusammenhang mit der Verwendung des Auffahrschutzelementes aufgeführt sind.

Eine Deckenschalung, bei der das Auffahrschutzelement an der Stirnseite der Deckenschalung in Verschieberichtung und/oder an einer weiteren Stirnseite der Deckenschalung in zu der Verschieberichtung entgegengesetzter Richtung mit in dieser Richtung ansteigender Flanke ausgebildet ist, erlaubt ein Verschieben der Deckenschalung in erfindungsgemäßer Weise mit jeder Form von Stützvorrichtung, die in eine Einschal- und Ausschalposition gesetzt werden kann.

Wenn bei der Deckenschalung eine an eine Unterkante der Stirnseite und/oder der weiteren Stirnseite angrenzende Seite des Auffahrschutzelementes im Wesentlichen bündig zu der Unterkante der Stirnseite und/oder der weiteren Stirnseite angeordnet ist, ist ein Gleiten oder Abrollen der Deckenschalung auf der oder über die Stützvorrichtung gewährleistet, wodurch eine Reibung beim Verschieben der Deckenschalung reduziert/minimiert ist, was einen Verschleiß der bewegten Teile und die Betriebskosten reduziert.

Alternativ kann das erfindungsgemäße Auffahrschutzelement der Anordnung an einem der Deckenschalung zugewandtem Ende der Stützvorrichtung ausgebildet sein. Die Deckenschalung kann dann, muss aber nicht abgeändert werden, um das erfindungsgemäße Verfahren zum Verschieben der Deckenschalung ausführen zu können.

In einer Ausführungsform der Erfindung umfasst eine Taktschiebevorrichtung zumindest die ersten und zweiten Stützvorrichtungen und die Deckenschalung mit dem Auffahrschutzelement, wobei die Deckenschalung mit einem Schalhautelement, das zur Ausformung einer Unterseite einer Fahrbahnplatte ausgebildet ist, versehen ist und die Stützvorrichtung als Fahrbahnplattenkonsole ausgeführt ist, wobei die Stützvorrichtung an einem der Deckenschalung zugewandtem Ende einen Stützkopf umfasst, wobei der Stützkopf mit einer Rolle zur Anlage an einem Längsträger der Deckenschalung versehen ist. Diese Taktschiebevorrichtung erlaubt ein Verschieben der Deckenschalung, mit der unter Vermeidung des beschriebenen Nachteils des Standes der Technik das Anheben und Einrichten der Deckenschalung vereinfacht und beschleunigt werden kann. Die Taktschiebevorrichtung ist mit Vorteil so ausgeführt, dass die Stützvorrichtung mit einer Absenkeinrichtung mit einem Hubkolben, einer Stützbasis und mit einer Arretiervorrichtung versehen ist, wobei der Hubkolben in der Stützbasis verschiebbar gelagert ist und von der Einschalposition in die Ausschalposition einschiebbar ist und mittels der Arretiervorrichtung in der herausgeschobenen Arbeitsposition arretierbar ist, wobei die Arretiervorrichtung mit einem Drehlager und einem Exzenterhebel versehen ist, wobei der Exzenterhebel in dem Drehlager drehbar befestigt ist und der Hubkolben und die Stützbasis in der Arbeitsposition über den Exzenterhebel gegeneinander abgestützt sind, und die Stützbasis und/oder der Hubkolben einenends den Stützkopf bilden. Ein einfaches und zuverlässiges Anheben auf das Betonierniveau und Absenken relativ zu dem Betonierniveau zum Erreichen und Beibehalten der Einschal- und Ausschalposition für die Stützvorrichtung ist so gewährleistet.

Weitere Merkmale und Vorteile der Erfindung ergeben sich aus der nachfolgenden detaillierten Beschreibung eines Ausführungsbeispiels der Erfindung, aus den Patentansprüchen sowie anhand der Figuren der Zeichnung, die erfindungswesentliche Einzelheiten zeigt. Die in der Zeichnung gezeigten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Ansprüchen der Erfindung verwirklicht sein. In den Figuren bezeichnen gleiche Bezugszeichen gleiche oder sich entsprechende Elemente.

Es zeigen:
- Fig. 1: eine erfindungsgemäße Taktschiebevorrichtung mit mehreren Stützvorrichtungen, einem vergrößert gezeigten Auffahrschutzelement und einer Deckenschalung, die von einem betonierten Betonierabschnitt einer Fahrbahnplatte einer Brücke in einen zu betonierenden Betonierabschnitt der Fahrbahnplatte verschoben wird, in einer Seitenansicht;
- Fig. 2: zwei der in Fig. 1 gezeigten, als Fahrbahnplattenkonsolen ausgebildeten Stützvorrichtungen, die jeweils mit einer Absenkeinrichtung versehen sind, an deren einem Ende eine Rolle angeordnet ist, in räumlicher Außenansicht;
- Fig. 3a: einen Teil der in Fig. 1 gezeigten Taktschiebevorrichtung mit unterhalb einer Fahrbahnplatte angeordneter Deckenschalung und einer der in Fig. 2 gezeigten mit der Absenkeinrichtung versehenen und als Fahrbahnplattenkonsole ausgebildeten Stützvorrichtungen in einer Vorderansicht;
- Fig. 3b: die als Fahrbahnplattenkonsole ausgebildete Stützvorrichtung mit der Absenkeinrichtung wie in Figur 3a gezeigt;
- Fig. 3c: die in Fig. 2 gezeigten Absenkeinrichtungen jeweils mit einem auf das Betonierniveau angehobenen Stützkopf und einem relativ zu dem Betonierniveau abgesenktem Stützkopf entsprechend einer Einschal- und Ausschalposition der mit der jeweiligen Absenkeinrichtung versehenen Stützvorrichtung; und
- Fig. 4: eine der beiden in Fig. 3b gezeigten Absenkeinrichtungen ohne Rolle in einer Querschnittsansicht von vorn mit einem Schieber als Exzenterhebelhaltevorrichtung, wobei ein Hubkolben in ausgefahrener Einschalposition gezeigt ist.

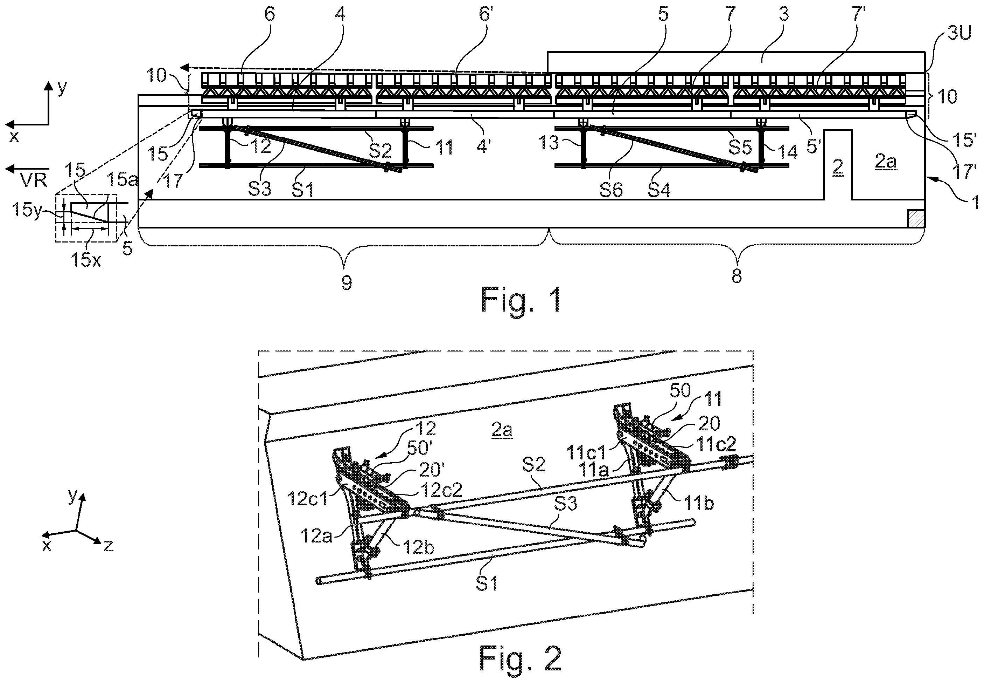

Fig. 1 zeigt eine Taktschiebevorrichtung gemäß der vorliegenden Erfindung mit Stützvorrichtungen 11-14, einem vergrößert dargestellten Auffahrelement 15 an eine Stirnseite 17 in einer Verschieberichtung VR eines Längsträgers 4 der Deckenschalung 10 sowie die Deckenschalung 10, die von einem ersten betonierten Betonabschnitt 8 in Form einer Fahrbahnplatte 3 einer zu errichtenden Brücke 1 in einen zu betonierenden Betonierabschnitt 9 verschoben wird. Die Deckenschalung 10, die sich mit Schalhautelementen 6, 6' in dem zu betonierenden nächsten Betonierabschnitt 9 und mit Schalhautelementen 7, 7' in dem ersten betonierten Betonierabschnitt 8 befindet, wird in X-Richtung von dem ersten Betonierabschnitt 8 entsprechend einem ersten Betoniertakt in den nächsten Betonierabschnitt 9 entsprechend einem nächsten Betoniertakt verschoben. Die Betonierabschnitte 8, 9 können länger sein als in der Fig. 1 dargestellt und jeweils eine Länge in X-Richtung aufweisen, die im Wesentlichen einer Länge die Deckenschalung mit den Schalhautelementen 6, 6', 7, 7' entspricht. Auch größere Längen der Betonierabschnitte 8, 9 sind möglich.

Das Schalelement 6 ist auf einem Rahmen mit einem Längsträger 4, der in X-Richtung orientiert ist, und auf Querträgern, die jeweils in Z-Richtung (senkrecht zur Papierebene) orientiert sind, angeordnet. Das Schalhautelement 6' ist auf einem Rahmen mit einem weiteren Längsträger 4', der in X-Richtung orientiert ist, angeordnet. Das weitere Schalhautelement 7 der Deckenschalung 10 ist auf einem Rahmen mit einem weiteren Längsträger 5, der in X-Richtung orientiert ist, angeordnet und das weitere Schalhautelement 7' ist auf einem Rahmen mit dem weiteren Längsträger 5' angeordnet. Die Schalhautelemente 6, 6', 7 und 7' sind miteinander verbunden, um eine einheitliche Schalungsfläche zur Ausformung einer Unterseite 3U der Fahrbahnplatte 3 auszuformen. Die Längsträger 4, 4', 5, 5' sind daher an einander zugewandten Enden der Längsträger miteinander verbunden, wobei an der Stirnseite 17 in Verschieberichtung VR, die der X-Richtung entspricht, ein Auffahrschutzelement 15 angebracht ist. In zu der Verschieberichtung VR entgegengesetzter Richtung, die der negativen X-Richtung entspricht, ist an einer weiteren Stirnseite 17' des Längsträgers 5' in entgegengesetzter Verschieberichtung VR ein weiteres Auffahrschutzelement 15' angeordnet.

An einer schrägen Seitenwand 2a eines Brückentrogs 2 der Brücke 1 sind eine erste Stützvorrichtung 11, eine zweite Stützvorrichtung 12, eine dritte Stützvorrichtung 13 und eine weitere Stützvorrichtung 14 in X-Richtung benachbart zueinander und nebeneinander angeordnet. Jede der Stützvorrichtungen 11-14 kann in eine Einschalposition EP und eine Ausschalposition AP versetzt sein, wobei bei Stützung der Deckenschalung 10 durch jede der Stützvorrichtungen 11-14 in der Einschalposition EP die Deckenschalung 10 auf ein Betonierniveau angehoben ist und in der Ausschalposition AP relativ zu dem Betonierniveau abgesenkt ist. Die ersten und zweiten Stützvorrichtungen 11, 12 sind durch Längsstreben S1, S2 in X-Richtung und auf unterschiedlichen Höhen in Y-Richtung miteinander verbunden, wobei die Längsstreben S1, S2 durch eine Querstrebe S3 zur Erhöhung der Steifigkeit der Verbindung der ersten und zweiten Stützvorrichtungen 11, 12 miteinander verbunden sind. Die dritte Stützvorrichtung 13 und die weitere Stützvorrichtung 14 sind über zwei weitere Längsstreben S4, S5 die in X-Richtung orientiert sind und sich in unterschiedlichen Höhen in Y-Richtung angeordnet sind, miteinander verbunden. Zur Erhöhung der Steifigkeit der Verbindung der dritten Stützvorrichtung 13 mit der weiteren Stützvorrichtung 14 sind die Längsstreben S4, S5 mit einer weiteren Querstrebe S6 miteinander verbunden.

Die Deckenschalung 10 wird durch die Stützvorrichtungen 11-14 gestützt und ist gegenüber den Stützvorrichtungen 11 bis 14 in Verschieberichtung VR und in zu dieser Richtung entgegengesetzter Richtung verschiebbar, wobei jeder der Längsträger 4, 4', 5, 5' auf jeder der Stützvorrichtungen 11-14 gleiten bzw. rollen kann. Hierzu berührt ein oberes, bei Stützung der Deckenschalung 10 zugewandtes Ende jeder der Stützvorrichtungen 11-14 eine Unterseite der Deckenschalung 10, die durch Unterseiten der Längsträger 4, 4', 5, 5' gebildet ist. In dem nächsten Betonierabschnitt 9 sind die ersten und zweiten Stützvorrichtungen 11, 12 in Verschieberichtung VR benachbart zueinander angeordnet, wobei die erste Stützvorrichtung 11 in die Ausschalposition AP und die in Verschieberichtung VR neben der ersten Stützvorrichtung 11 angeordnete zweite Stützvorrichtung 12 in die Einschalposition EP versetzt ist. Die Deckenschalung 10 wird in Fig. 1 von dem ersten Betonierabschnitt 8 in den nächsten Betonierabschnitten 9 verschoben, wobei die Längsträger 4, 4' den ersten Betonierabschnitt bereits verlassen haben und sich in dem nächsten Betonierabschnitt 9 befinden. Zu einem früheren Zeitpunkt (nicht dargestellt) war die Deckenschalung 10 vollständig unterhalb des betonierten ersten Betonierabschnitts 8 angeordnet, wobei die erste Stützvorrichtung 11, die dritte Stützvorrichtung 13 und die weitere Stützvorrichtung 14 in die Ausschalposition AP versetzt waren, um die Deckenschalung 10 von der Unterseite 3U der Fahrbahnplatte 3 abzusenken und in Verschieberichtung VR zu verschieben.

Beim Verschieben der Deckenschalung 10 in Verschieberichtung VR in den nächsten Betonierabschnitt 9 und nach Überfahren der ersten Stützvorrichtung 11 würde die Stirnseite 17 der Deckenschalung auf das der Deckenschalung 10 zugewandte Ende der zweiten Stützvorrichtung auffahren, da sich die zweite Stützvorrichtung 12 in der Einschalposition und damit auf dem Betonierniveau befindet und die anderen Stützvorrichtungen 11, 13, 14 gegenüber dem Betonierniveau abgesenkt sind, weil jede dieser Stützvorrichtungen 11, 13, 14 sich in der Ausschalposition AP befindet. Erfindungsgemäß ist vorgesehen, dass das Auffahrschutzelement 15 zwischen der zweiten Stützvorrichtung 12 und der Stirnseite 17 der Deckenschalung 10 bei Auftreffen der Stirnseite 17 der Deckenschalung 10 nach Überfahrung der ersten Stützvorrichtung 11 auf die zweite Stützvorrichtung 12 angeordnet wird, so dass das Auffahrschutzelement 15 eine in der Verschieberichtung VR ansteigende Flanke 15a zur Führung der Deckenschalung 10 in Verschieberichtung VR ausbildet. Zum Zeitpunkt des Auftreffens der Stirnseite 17 auf dem der Deckenschalung 10 zugewandten Ende der zweiten Stützvorrichtung 12 ist daher das Auffahrschutzelement 15 zwischen der zweiten Stützvorrichtung 12 und der Stirnseite 17 so angeordnet, dass das Auffahrschutzelement 15 die in Verschieberichtung VR ansteigende Flanke 15a zur Führung der Deckenschalung 10 in Verschieberichtung VR ausbildet. Nach dem Auftreffen der Stirnseite 17 auf die zweite Stützvorrichtung 12 wird durch das Auffahrschutzelement 15 die Stirnseite 17 der Deckenschalung 10 auf das Betonierniveau angehoben, so dass die zweite Stützvorrichtung 12 von der Deckenschalung 10 überfahren wird. Dieser Zustand, in dem die zweite Stützvorrichtung 12 von der Deckenschalung überfahren ist, ist in Fig. 1 dargestellt. Nach Überfahren der zweiten Stützvorrichtung 12 ist die Deckenschalung 10 in Form einer Rampe in Verschieberichtung nach oben in die Y-Richtung geneigt, wie es der gestrichelte Pfeil in Fig. 1 andeutet. Die Steigung des Pfeils ist überzeichnet dargestellt.

Denn aufgrund der Dimensionen der Deckenschalung 10, die deutlich größer sind als der Abstand zwischen der Ausschalposition AP und der Einschalposition EP in Y-Richtung, ist in Fig. 1 nur mit Mühe zu erkennen, dass die zweite Stützvorrichtung 12 in die Einschalposition auf Betonierniveau versetzt ist und sich die oberen Enden der anderen Stützvorrichtungen 11, 13 und 14 durch erfolgtes Versetzen in die Ausschalposition sich auf einem relativ zu dem Betonierniveau abgesenkten Niveau befinden. Dies verdeutlicht auch die Ausformung der in Verschieberichtung VR ansteigenden Flanke 15a des Auffahrschutzelementes 15, bei der ein Höhenabschnitt 15Y bei Auftreffen des Auffahrschutzelementes auf die zweite Stützvorrichtung 12 überwunden wird, wenn ein Längsabschnitt 15X der ansteigenden Flanke 15a, der einer Länge des Auffahrschutzelements in X-Richtung entspricht, die zweite Stützvorrichtung 12 überstreicht/überfährt. Der Höhenabschnitt 15Y beträgt mindestens einen Abstand oder Höhenabstand zwischen der Einschalposition und der Ausschalposition in Y-Richtung und kann wenige Zentimeter betragen, beispielsweise 5 cm, betragen. Wie in Fig. 1 dargestellt, kann das Auffahrschutzelement 15 schnabelförmig ausgeführt sein. Auch möglich ist beispielsweise eine teilförmige, kufenförmige oder in Form einer Rampe als Voll- oder auch Hohlkörper ausgebildete Ausführung. Eine Breite des Auffahrschutzelementes 5 in Z-Richtung (aus der Blattebene heraus) kann einer Breite des Längsträgers 4 entsprechen.

In Fig. 2 sind die in Fig. 1 gezeigten Stützvorrichtungen 11, 12 als Fahrbahnplattenkonsolen ausgebildet, wobei die erste Stützvorrichtung 11 mit einer Absenkeinrichtung 20 und die zweite Stützvorrichtung 12 mit einer weiteren Absenkeinrichtung 20' versehen ist. An einem Ende in Y-Richtung oder oberen Ende der Absenkeinrichtung 50 ist eine Rolle 50 zur Auflage auf einem der Längsträger 4, 4', 5, 5' angeordnet und an einem weiteren Ende der Absenkeinrichtung 20' in Y-Richtung oder weiteren oberen Ende ist eine weitere Rolle 50' zur Auflage auf einem der Längsträger 4, 4', 5, 5' angeordnet. Die Stützvorrichtung 11 umfasst ein erstes Trägerelement 11a, das an der schrägen Seitenwand 2a orientiert in Y-Richtung angeordnet und befestigt ist. An einem oberen Ende des ersten Trägerelementes 11a sind dritte Trägerelemente 11c1, 11c2 an dem ersten Trägerelement befestigt und in Z-Richtung orientiert. Ungefähr in der Mitte der zwei dritten Trägerelemente 11c1, 11c2 ist die Absenkeinrichtung 20 als Teil der ersten Stützvorrichtung 11 angeordnet. Das Ende jeweils beider dritter Trägerelemente 11c1, 11c2 in Z-Richtung ist über ein zweites Trägerelement 11b mit einem weiteren Ende des ersten Trägerelementes 11a in negativer Y-Richtung verbunden. Das zweite Trägerelement 11b ist als Teleskop bzw. Hubvorrichtung ausgeführt, so dass eine Länge des zweiten Trägerelementes 11b durch Ausfahren des Teleskops oder eines Kolbens der Hubvorrichtung vergrößert werden kann. Auf diese Weise kann die erste Stützvorrichtung 11 an Seitenwänden unterschiedlicher positiver oder auch negativer Seitenneigung befestigt werden, wobei die Rolle 50 stets in Z-Richtung, also horizontal, ausgerichtet ist.

Die zweite Stützvorrichtung 12 weist ein erstes Trägerelement 12a , dass an der schrägen Seitenwand 2a montiert ist auf, wobei sich von einem oberen Ende des ersten Trägerelementes 123a dritte Trägerelemente 12c1, 12c2 in Z-Richtung erstrecken, zwischen denen die weitere Absenkeinrichtung 20' mit der weiteren Rolle 50' angeordnet ist. Ein jeweiliges Ende beider dritter Trägerelemente 12c1, 12c2 in Z-Richtung ist über ein zweites Trägerelement 12b in Form eines Teleskops oder einer Hubvorrichtung mit einem weiteren Ende des ersten Trägerelementes 12a in negativer Y-Richtung verbunden. Die Trägerelemente 11a, 11b, 11c1, 11c2 der ersten Stützvorrichtung 11 und die Trägerelemente 12a, 12b, 12c1, 12c2, der zweiten Stützvorrichtung 12 bilden jeweils eine dreieckförmige Anordnung, die vorliegend als Stahlträgerkonstruktion ausgeführt ist. Die erste Stützvorrichtung 11 und die zweite Stützvorrichtung 12 befinden sich jeweils in der Einschalposition EP, da die Absenkeinrichtungen 20, 20' abgesenkt bzw. eingefahren sind. Zur Ausführung des erfinderischen Verfahrens zum Verschieben der Deckenschalung 10 wird die zweite Stützvorrichtung 12 in nächsten Betonierabschnitt 9 in die Einschalposition EP versetzt, bevor die Deckenschalung 10 nach Überfahren der ersten Stützvorrichtung 11 auf die zweite Stützvorrichtung 12 trifft.

Die Querstrebe S3 ist mittels Schellen mit den Längsstreben S1, S2 verbunden, wobei die Längsstrebe S1 an den Enden der Stützvorrichtungen 11, 12 in negativer Y-Richtung angebracht ist. Die Längsstrebe S2 ist an den Enden der dritten Trägerelemente 11c1, 11c2 der ersten Stützvorrichtung 11 und 12c1, 12c2 der zweiten Stützvorrichtung 12 in Z-Richtung angebracht. Durch die Verbindung beider Stützvorrichtungen durch die Längsstreben S1, S2 und die Querstrebe S3 kann eine in Verschieberichtung VR wirkende Kraft in X-Richtung, die auf jede der Stützvorrichtungen 11, 12 während des Verschiebens wirkt, auf sämtliche der Auflagepunkte der ersten und zweiten Stützvorrichtung 11, 12 an der Seitenwand 2a abgetragen werden, so dass die Stabilität beider Stützvorrichtungen während des Verschiebens der Deckenschalung gegenüber einer Lösung ohne die Längsstreben S1, S2 und die Querstrebe S3 erhöht wird.

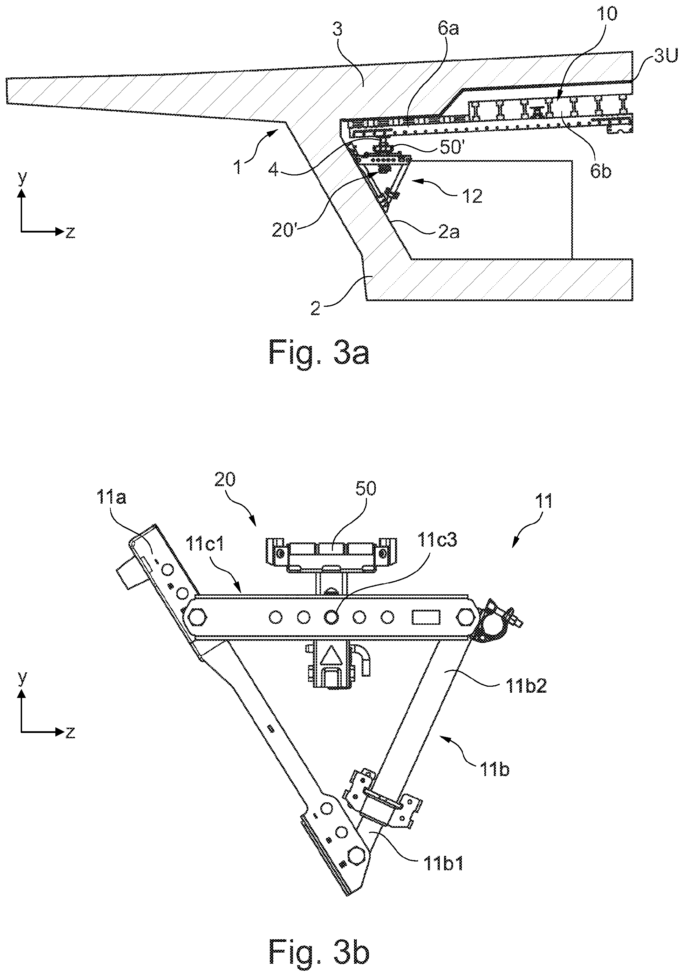

In Fig. 3a ist ein Teil der in Fig. 1 gezeigten Taktschiebevorrichtung mit unterhalb der Fahrbahnplatte 3 angeordneter Deckenschalung 10 und der mit der Absenkeinrichtung 20 versehenen und als Fahrbahnplattenkonsole ausgebildeten Stützvorrichtung 11 in einer Vorderansicht gezeigt. Ein erster Abschnitt 6a des Schalhautelementes 6 und ein zu dem ersten Abschnitt 6a in Y-Richtung erhöhter zweiter Abschnitt 6b des Schalhautelementes 6 formen die Unterseite 3U der Fahrbahnplatte 3 des ersten Betonierabschnittes 9 des ersten Betoniertaktes aus Die erste Stützvorrichtung 11, die die Absenkeinrichtung 20 umfasst, befindet sich in der Einschalposition EP, in der die Absenkeinrichtung derart ausgefahren ist, dass sich die zweite Stützvorrichtung 12 und damit die Deckenschalung 10 jeweils auf dem Betonierniveau befinden, in dem die Deckenschalung 10 an der Unterseite 3U der Fahrbahntreppe 3 bündig bzw. plan anliegt.

Der Längsträger 4 der Deckenschalung 10 liegt auf der Rolle 50' auf, wobei die Rolle 50' in Z-Richtung orientiert ist und die Deckenschalung 10 in X-Richtung oder negativer X-Richtung auf der Rolle 50' verschiebbar ist. Die erste Stützvorrichtung 11 ist mit dem ersten Trägerelement 11a an der Seitenwand 2a des Brückentrogs 2 der Brücke 1 angebracht, so dass die Rolle 50' der Absenkeinrichtung 20' horizontal, also in Z-Richtung, orientiert ist. Durch Ausfahren eines Teleskops oder einer Hubvorrichtung als zweites Trägerelement 11b könnte die erste Stützvorrichtung 11 auch auf der gegenüberliegenden Seite der Seitenwand 2a angebracht werden, wobei die Rolle 50 horizontal ausgerichtet wäre. Der Längsträger 4 weist an seiner Stirnseite 17 in Verschieberichtung VR das Auffahrschutzelement 15 auf, so dass bei Auftreffen der Deckenschalung 10 auf die zweite Stützvorrichtung 12 durch das Auffahrschutzelement 15 die Stirnseite 17 der Deckenschalung 10 auf das Betonierniveau angehoben wird, so dass die zweite Stützvorrichtung 12 von der Deckenschalung 10 überfahren wird. Zur Verdeutlichung ist in Fig. 3a die Fahrbahnplatte 3 bereits betoniert dargestellt, was bei dem erfindungsgemäßen Verfahren nicht der Fall ist, weil die zweite Stützvorrichtung 12 in die Einschalposition EP versetzt wird, bevor die Deckenschalung 10 die zweite Stützvorrichtung überfährt, um in die Einschalposition zu gelangen und damit ein Betonieren des nächsten Betonierabschnitt 9 zu ermöglichen.

In Fig. 3b ist die als Fahrbahnplattenkonsole ausgebildete Stützvorrichtung 11 mit der Absenkeinrichtung 20 in der Ausschalposition AP in einer im Vergleich zu Fig. 3a vergrößerten Vorderansicht gezeigt. Das erste Trägerelement 11a, das zweite Trägerelement 11b und die dritten Trägerelemente 11c1, 11c2 bilden die dreieckförmige Stahlträgerkonstruktion, wobei das zweite Trägerelement 11b in Form einer Hubvorrichtung mit einem Hubzylinder 11b2 mit einem darin geführten Hubkolben 11b1 ausgeführt ist. Bei der Absenkeinrichtung 20 ist ein Führungsbolzen 11c3 durch Bolzendurchführungsbohrungen in den dritten Trägerelementen 11c1, 11c2 (nicht dargestellt) geführt.

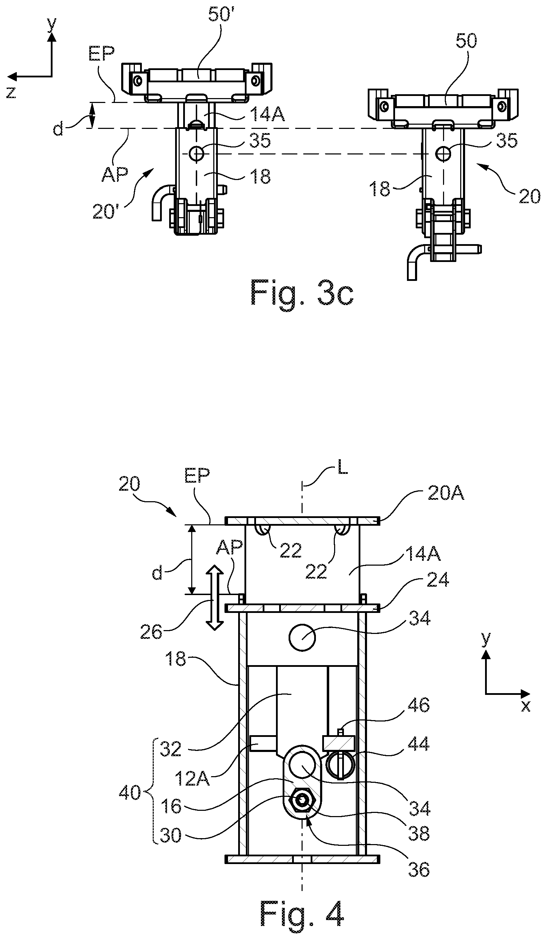

In Fig. 3c sind die in Fig. 2 gezeigten Absenkeinrichtungen 20, 20' jeweils mit einem auf das Betonierniveau angehobenen Stützkopf der Absenkeinrichtung 20' und einem relativ zu dem Betonierniveau abgesenktem Stützkopf der Absenkeinrichtung 20 entsprechend der Einschalposition EP und der Ausschalposition AP der mit der jeweiligen Absenkeinreichung 20, 20' versehenen Stützvorrichtung 11, 12 gezeigt. Die Absenkeinrichtung 20 und die weitere Absenkeinrichtung 20' weisen jeweils eine Stützbasis 18 auf, die in Y-Richtung auf gleicher Höhe angeordnet sind. Dies ist durch Justagebohrungen 35 in jeder der Stützbasen 18 der Absenkeinrichtungen 20, 20' durch eine horizontale Strichlinie verdeutlicht, die beide Justagebohrungen 35 miteinander verbindet. In der Stützbasis 18 ist ein Hubkolben 14A geführt, der bei der Absenkeinrichtung 20' derart ausgefahren ist, dass die Absenkeinrichtung 20' und damit die zweite Stützvorrichtung 12 die Einschalposition EP jeweils erreichen. Eine Hublänge des Hubkolbens 14A entspricht damit einem vertikalen Abstand oder Höhenabstand d zwischen der Ausschalposition AP und der Einschalposition EP in Y-Richtung. Die Ausschalposition AP befindet sich auf Höhe eines oberen Endes der Stützbasis 18, wie dies bei der Absenkeinrichtung 20 gezeigt ist. Die Einschalposition EP befindet sich auf Höhe eines oberen Endes des Hubkolbens 14A, wie dies bei der Absenkeinrichtung 20' gezeigt ist. Der Höhenabstand zwischen der Einschalposition und der Ausschalposition kann beispielsweise 50 mm betragen. Wenn die Absenkeinrichtung 20' von der Ausschalposition AP in die Einschalposition EP versetzt wird, wird nicht nur das obere Ende des Hubkolbens 14a um den Höhenabstand d zwischen der Ausschalposition AP und der Einschalposition EP angehoben, sondern auch die auf dem Hubkolben 14a angeordnete Rolle 50'. Durch Versetzen der Rolle 50' von der Ausschalposition AP in die Einschalposition EP kann die auf der Rolle 50' verschiebbar aufliegende Deckenschalung 10 auf das Betonierniveau angehoben werden.

In Fig. 4 ist eine der in Fig. 3b gezeigten Absenkeinrichtungen 20 ohne Rolle in einer Querschnittsansicht von vorn mit einem Schieber 12A als Exzenterhebelhaltevorrichtung gezeigt, wobei der Hubkolben 14A in ausgefahrener Einschalposition EP vorliegt. Die Absenkeinrichtung 20 weist eine mit L bezeichnete Längsachse, den Hubkolben 14A sowie einen Exzenterhebel 16 auf. Der Hubkolben 14A befindet sich wie bei der Absenkeinrichtung 20' in Fig. 3c in der Einschalposition EP, die zu der Ausschalposition AP um den Höhenabstand d in Y-Richtung verschoben ist. Die Stützbasis 18 kann in Form eines Gehäuses ausgeführt sein, dass einen Mechanismus einer Arretiervorrichtung, z. B. des Exzenterhebels 16, schützend umschließt. Sowohl die Stützbasis 18 als auch der Hubkolben 14A weisen an ihren freien Enden eine Abschlussplatte auf, von der jeweils ein Stützkopf 20A ausgebildet ist. Am hubkolbenseitigen Ende der Stützbasis 18 können zwischen der Stützbasis 18 und dem Stützkopf 20A des Hubkolbens 14A Anschlagnoppen 22 angeordnet sein. Die Anschlagnoppen 22 können dabei auf einer Endplatte 24 der Stützbasis 18 beispielsweise angeschweißt sein. Die Endplatte 24 weist eine der Umfangsform des Querschnittes des Hubkolbens 14A ausgeformte Öffnung (nicht dargestellt) auf, durch die der Hubkolben 14A durchgeschoben ist. Die Querschnittsform des Hubkolbens 14A kann z. B. kreisförmig ausgeführt sein. Es können jedoch auch Ausführungsformen mit einer anderen, insbesondere polygonalen, bevorzugt rechteckigen, Querschnittsform eingesetzt werden. Die Richtung der verschiebbaren Lagerung des Hubkolbens 14A in der Stützbasis 18 ist durch einen Doppelfall 26 symbolisiert eingezeichnet.

Der Hubkolben 14A ist von seiner hier gezeigten herausgeschobenen Arbeitsposition in Form der Einschalposition EP in die in Fig. 3c mit der Absenkeinrichtung 20 gezeigten Absenkposition in Form der Ausschalposition AP in einer zur Längsachse L axialen Richtung einschiebbar und mittels der Arretiervorrichtung, z. B. dem Exzenterhebel 16, in der herausgeschobenen Arbeitsposition arretierbar. Fig. 4 zeigt eine Absenkeinrichtung 20 mit in Arbeitsposition, d. h. aus der Stützbasis 18 maximal ausgerückten Position (=Vorhubposition oder Einschalposition) angeordnetem Hubkolben 14A. Die Absenkeinrichtung 20 befindet sich mit anderen Worten in ihrer Stützfunktionsstellung. Die Teile der Arretiervorrichtung, z. B. der Exzenterhebel 16, sind entsprechend positioniert. Der in Drehlagern an der Stützbasis 18 drehbar befestigte Exzenterhebel 16 ist über ein Pleuelelement 32 mit dem Hubkolben 14A beweglich verbunden. Dazu weisen der Exzenterhebel 16 und der Hubkolben 14A jeweils eine Bohrung auf, die als weitere Drehlager dienen. Das Pleuelelement 32 weist in dessen Endbereichen jeweils eine bolzenartige Drehachse 34 auf. Die beiden Drehachsen 34 sind jeweils in einem der weiteren Drehlager des Exzenterhebels 16 und des Hubkolbens 14A gelagert.

Der Schwerpunkt des Exzenterhebels 16 befindet sich außerhalb der von einer Stützwelle 30 ausgebildeten Drehachse des Exzenterhebels 16 zwischen dem Hubkolben 14A und der Drehachse des Exzenterhebels 16.

Eine Nabe 36 der Drehachse der Stützwelle 30 und damit des Exzenterhebels16 und eine Schraubenmutter 38 zu deren Befestigung sind in Fig. 4 erkennbar. Der Hubkolben 14A, das Pleuelelement 32 und der Exzenterhebel 16 sind ähnlich des Aufbaus eines Hubkolbenmotors angeordnet, wobei das Pleuelelement 32 und der Exzenterhebel 16 einen Kniehebel 40 ausbilden, über den der Hubkolben 14A mit der Stützbasis 18 beweglich verbunden ist. Der Hubkolben 14A und die Stützbasis 18 sind in der dargestellten Arbeitsposition in Form der Einschalposition über den Exzenterhebel 16 gegeneinander abgestützt. In der dargestellten Ausführungsform der Absenkeinrichtung 20 erfolgt dies über die Verbindung mit dem Pleuelelement 32.

Die von dem Schieber 12A ausgebildete Exzenterhebelhaltervorrichtung kann eine Rückstellfeder 44 (integrierte Federrückstellung) aufweisen, wobei der Schieber 12A, z. B. über ein Befestigungsstift 46, mittels der Rückstellfeder 44 an der Stützbasis 18 befestigt ist. Weiter kann an dem Schieber 12A eine Sichtmarkierung zur Unterscheidung der Absenkposition in Form der Ausschalposition AP von der angehobenen Arbeitsposition in Form der Einschalposition EP markiert sein. Diese Sichtmarkierung kann z. B. aus einem roten und einem grünen, auf dem freien Ende des langen Schenkels des Schiebers 12A aufgebrachten Sichtfeld bestehen, wobei je nach Stellung des Schiebers 12A nur das rote Sichtfeld oder das rote und das grüne Sichtfeld außerhalb des Gehäuses zu liegen kommen.

Die unter Bezug auf die dargestellte Ausführungsform beschriebenen Merkmale der Erfindung, wie beispielsweise ein manuelles Versetzen der Stützvorrichtungen in die Einschal- und Ausschalpositionen als Arbeitspositionen, können auch bei anderen Ausführungsformen der Erfindung vorhanden sein, wie beispielsweise dem Versetzen der Stützvorrichtungen in die Einschal- und Ausschalpositionen mittels elektrischer, pneumatischer und/oder hydraulischer Kafteinleitung, außer wenn es anders angegeben ist oder sich aus technischen Gründen von selbst verbietet.

## Patentansprüche

1. Verfahren zum Verschieben einer Deckenschalung (10) in einen nächsten Betoniertakt mit einem zu betonierenden nächsten Betonierabschnitt (9) mit den Schritten:
- Anordnen von entlang einer Verschieberichtung (VR), insbesondere an einer Seitenwand, beispielsweise eines Randbereichs eines Brückentrogs, angeordneten ersten (11) und zweiten (12) Stützvorrichtungen zur Stützung der Deckenschalung (10) unterhalb des nächsten Betonierabschnittes (9), die jeweils als Arbeitspositionen eine Einschalposition (EP) und eine Ausschalposition (AP) aufweisen, wobei bei Stützung der Deckenschalung (10) durch die Stützvorrichtung (11-14) in der Einschalposition (EP) die Deckenschalung (10) auf ein Betonierniveau angehoben ist und in der Ausschalposition (AP) relativ zu dem Betonierniveau abgesenkt ist,
- Versetzen der ersten Stützvorrichtung (11) in die Ausschalposition (AP) und der zu der ersten Stützvorrichtung (11) in Richtung der Verschieberichtung (VR) angeordneten zweiten Stützvorrichtung (12) in die Einschalposition (EP),
- Anordnen eines Auffahrschutzelementes (15, 15') zwischen der zweiten Stützvorrichtung (12) und einer Stirnseite (17, 17') der Deckenschalung (10) bei Auftreffen der Stirnseite (17, 17') der Deckenschalung (10) nach Überfahren der ersten Stützvorrichtung (11) auf die zweite Stützvorrichtung (12), so dass das Auffahrschutzelement (15, 15') eine in Verschieberichtung (VR) ansteigende Flanke (15a) zur Führung der Deckenschalung (10) in Verschieberichtung (VR) ausbildet, und
- Anheben der Stirnseite (17, 17') der Deckenschalung (10) geführt durch das Auffahrschutzelement (15, 15') auf das Betonierniveau, so dass die zweite Stützvorrichtung (12) von der Deckenschalung (10) überfahren wird.

2. Verfahren zum Verschieben einer Deckenschalung nach Anspruch 1, bei dem durch das Verschieben der Deckenschalung (10) in den nächsten Betoniertakt die Deckenschalung (10) zumindest teilweise auf das Betonierniveau angehoben wird.

3. Verfahren zum Verschieben einer Deckenschalung nach Anspruch 1 oder Anspruch 2, bei dem nach Abschluss des Verschiebens der Deckenschalung (10) in den nächsten Betoniertakt die erste Stützvorrichtung (11) in die Einschalposition (EP) versetzt wird, um die Deckenschalung (10) auf das Betonierniveau anzuheben.

4. Verfahren zum Verschieben einer Deckenschalung nach einem der vorhergehenden Ansprüche, bei dem die Deckenschalung (10) von einem ersten Betoniertakt mit einem zumindest teilweise betonierten ersten Betonierabschnitt (8) in den nächsten Betoniertakt verschoben wird, wobei der nächste Betonierabschnitt (9) zu dem ersten Betonierabschnitt (8) in Verschieberichtung (VR) benachbart angeordnet wird, wobei
- eine dritte Stützvorrichtung (13) zur Stützung der Deckenschalung (10) in zu der Verschieberichtung (VR) entgegengesetzter Richtung benachbart zu der ersten Stützvorrichtung (11) unterhalb des ersten Betonierabschnittes (8) angeordnet wird,
- die dritte Stützvorrichtung (13) in die Ausschalposition (AP) versetzt wird,
- die Deckenschalung (10) verschoben wird, indem die Deckenschalung (10) zuerst zumindest teilweise von der dritten Stützvorrichtung (13) gestützt wird, danach die erste Stützvorrichtung (11) und danach die zweite Stützvorrichtung (12) von der Stirnseite (17) der Deckenschalung (10) in Verschieberichtung (VR) überfahren wird, und
- das Verschieben der Deckenschalung (10) in den nächsten Betonierabschnitt (9) fortgesetzt wird, bis eine weitere, in zu der Verschieberichtung (VR) entgegengesetzter Richtung orientierte Stirnseite (17') der Deckenschalung (10) von der dritten Stützvorrichtung (13) freigegeben wird oder lediglich ein die weitere Stirnseite (17') der Deckenschalung (10) umfassender Endabschnitt der Deckenschalung (10) von der dritten Stützvorrichtung (13) gestützt wird.

5. Verfahren zum Verschieben einer Deckenschalung nach einem der vorhergehenden Ansprüche, bei dem
- in Verschieberichtung (VR) neben der zweiten Stützvorrichtung (12) und/oder in zu der Verschieberichtung (VR) entgegengesetzter Richtung neben der ersten (11)/dritten (13) Stützvorrichtung weitere Stützvorrichtungen (14) angeordnet werden, und
- vor dem Verschieben der Deckenschalung (10) in den nächsten Betonierabschnitt (9) die in Verschieberichtung (VR) neben der zweiten Stützvorrichtung (12) angeordneten weiteren Stützvorrichtungen in die Einschalposition (EP) versetzt werden und/oder die in zu der Verschieberichtung (VR) entgegengesetzter Richtung neben der zweiten Stützvorrichtung (12) angeordneten weiteren Stützvorrichtungen (14) in die Ausschalposition (AP) versetzt werden.

6. Verfahren zum Verschieben einer Deckenschalung nach einem der vorhergehenden Ansprüche, bei dem
- die ersten und zweiten Stützvorrichtungen (11, 12) benachbart zueinander angeordnet werden, oder
- zwischen den ersten und zweiten Stützvorrichtungen (11, 12) zumindest eine andere Stützvorrichtung angeordnet wird, wobei die andere Stützvorrichtung in die Ausschalposition (AP) oder in eine Position zwischen die Ausschalposition (AP) und die Einschalposition (EP) versetzt wird.

7. Verfahren zum Verschieben einer Deckenschalung nach einem der vorhergehenden Ansprüche, bei dem das Auffahrschutzelement (15, 15') an der Stirnseite (17) der Deckenschalung (10) in Verschieberichtung (VR) und/oder an einer/der weiteren Stirnseite (17') der Deckenschalung (10) in zu der Verschieberichtung (VR) entgegengesetzter Richtung mit in dieser Richtung ansteigender Flanke (15a) ausgebildet wird.

8. Verfahren zum Verschieben einer Deckenschalung nach Anspruch 7, bei dem eine an eine Unterkante der Stirnseite (17) und/oder der weiteren Stirnseite (17') angrenzende Seite des Auffahrschutzelementes (15, 15') im Wesentlichen bündig zu der Unterkante der Stirnseite (17) und/oder der weiteren Stirnseite (17') angeordnet wird, um ein Gleiten oder Abrollen der Deckenschalung (10) auf der oder über die Stützvorrichtung (11-14) zu gewährleisten.

9. Verfahren zum Verschieben einer Deckenschalung nach einem der vorhergehenden Ansprüche, bei dem das Auffahrschutzelement (15, 15') an einem der Deckenschalung (10) zugewandtem Ende von zumindest einer der Stützvorrichtungen (11-14) ausgebildet wird.

10. Verfahren zum Verschieben einer Deckenschalung nach einem der vorhergehenden Ansprüche, bei dem das Auffahrschutzelement (15, 15') schnabelförmig, keilförmig, kufenförmig oder in Form einer Rampe als Voll- oder Hohlkörper ausgebildet wird.

11. Verfahren zum Verschieben einer Deckenschalung nach einem der vorhergehenden Ansprüche, bei dem die Deckenschalung (10) mit einem Schalhautelement (6, 7), das eine Unterseite (3U) einer Fahrbahnplatte (3) ausformt, versehen wird und die Stützvorrichtungen (11-14) als Fahrbahnplattenkonsole ausgeführt wird.

12. Verfahren zum Verschieben einer Deckenschalung nach Anspruch 11, bei dem die Stützvorrichtung (11-14) an einem der Deckenschalung (10) zugewandtem Ende einen Stützkopf (20A) ausbildet, wobei der Stützkopf (20A) mit einer Rolle (50, 50') zur Anlage an einem Längsträger (4, 5) der Deckenschalung (10) versehen wird.

13. Verfahren zum Verschieben einer Deckenschalung nach Anspruch 12, bei dem die Stützvorrichtung (11-14) mit einer Absenkeinrichtung (20, 20') mit einem Hubkolben (14A), einer Stützbasis (18) und mit einer Arretiervorrichtung versehen wird, wobei der Hubkolben (14A) in der Stützbasis (18) verschiebbar gelagert wird und von der Einschalposition in die Ausschalposition einschiebbar ausgeführt wird und mittels der Arretiervorrichtung in der herausgeschobenen Arbeitsposition arretierbar ausgeführt wird, wobei die Arretiervorrichtung mit einem Drehlager (28) und einem Exzenterhebel (16) versehen wird, wobei der Exzenterhebel (16) in dem Drehlager (28) drehbar befestigt wird und der Hubkolben (14A) und die Stützbasis (18) in der Arbeitsposition (s.o.) über den Exzenterhebel (16) gegeneinander abgestützt werden, und die Stützbasis (18) und/oder der Hubkolben (14A) einenends den Stützkopf (20A) ausbilden.

14. Anordnung mit ersten (11) und zweiten (12) Stützvorrichtungen, einer Deckenschalung und einem Auffahrschutzelement (15, 15') zum Vermeiden eines Auffahrens einer Stirnseite (17, 17') der Deckenschalung (10), wobei die Deckenschalung (10) von der in eine Ausschalposition (AP) gesetzten ersten Stützvorrichtung (11) gestützt ist, auf die in eine Einschalposition (EP) gesetzte zweite Stützvorrichtung (12) beim Verschieben der Deckenschalung (10) in einen nächsten Betoniertakt mit einem zu betonierenden nächsten Betonierabschnitt (9), wobei die zweite Stützvorrichtung (12) in Richtung einer Verschieberichtung (VR) der Deckenschalung (10) zu der ersten Stützvorrichtung (11) angeordnet ist, wobei bei Stützung der Deckenschalung (10) durch die Stützvorrichtung (11, 12) in der Einschalposition (EP) die Deckenschalung (10) auf ein Betonierniveau angehoben ist und in der Ausschalposition (AP) relativ zu dem Betonierniveau abgesenkt ist, wobei bei Auftreffen der Stirnseite (17, 17') der Deckenschalung (10) nach Überfahren der ersten Stützvorrichtung (11) auf die zweite Stützvorrichtung (12) das Auffahrschutzelement (15, 15') zwischen der zweiten Stützvorrichtung (12) und einer Stirnseite (17, 17') der Deckenschalung (10) so angeordnet ist, dass das Auffahrschutzelement (15, 15') eine in Verschieberichtung (VR) ansteigende Flanke (15a), die beispielsweise schnabelförmig, keilförmig, kufenförmig oder in Form einer Rampe als Voll- oder Hohlkörper ausgebildet ist, zur Führung der Deckenschalung in Verschieberichtung (VR) aufweist, und ausgebildet ist, die Stirnseite (17, 17') der Deckenschalung (10) auf das Betonierniveau anhebend derart zu führen, dass die zweite Stützvorrichtung (12) von der Deckenschalung (10) überfahren werden kann, wobei das Auffahrschutzelement (15, 15') an der Stirnseite (17) der Deckenschalung (10) in Verschieberichtung (VR) und/oder an einer weiteren Stirnseite (17') der Deckenschalung (10) in zu der Verschieberichtung (VR) entgegengesetzter Richtung mit in dieser Richtung ansteigender Flanke (15a) ausgebildet ist.

15. Anordnung nach Anspruch 14, wobei bei der Deckenschalung eine an eine Unterkante der Stirnseite (17) und/oder der weiteren Stirnseite (17') angrenzende Seite des Auffahrschutzelementes (15, 15') im Wesentlichen bündig zu der Unterkante der Stirnseite (17) und/oder der weiteren Stirnseite (17') angeordnet ist, um ein Gleiten oder Abrollen der Deckenschalung (10) auf der oder über die Stützvorrichtung (11, 12) zu gewährleisten.

16. Anordnung mit ersten (11) und zweiten (12) Stützvorrichtungen, einer Deckenschalung und einem Auffahrschutzelement (15, 15') zum Vermeiden eines Auffahrens einer Stirnseite (17, 17') der Deckenschalung (10), wobei die Deckenschalung (10) von der in eine Ausschalposition (AP) gesetzten ersten Stützvorrichtung (11) gestützt ist, auf die in eine Einschalposition (EP) gesetzte zweite Stützvorrichtung (12) beim Verschieben der Deckenschalung (10) in einen nächsten Betoniertakt mit einem zu betonierenden nächsten Betonierabschnitt (9), wobei die zweite Stützvorrichtung (12) in Richtung einer Verschieberichtung (VR) der Deckenschalung (10) zu der ersten Stützvorrichtung (11) angeordnet ist, wobei bei Stützung der Deckenschalung (10) durch die Stützvorrichtung (11, 12) in der Einschalposition (EP) die Deckenschalung (10) auf ein Betonierniveau angehoben ist und in der Ausschalposition (AP) relativ zu dem Betonierniveau abgesenkt ist, wobei bei Auftreffen der Stirnseite (17, 17') der Deckenschalung (10) nach Überfahren der ersten Stützvorrichtung (11) auf die zweite Stützvorrichtung (12) das Auffahrschutzelement (15, 15') zwischen der zweiten Stützvorrichtung (12) und einer Stirnseite (17, 17') der Deckenschalung (10) so angeordnet ist, dass das Auffahrschutzelement (15, 15') eine in Verschieberichtung (VR) ansteigende Flanke (15a), die beispielsweise schnabelförmig, keilförmig, kufenförmig oder in Form einer Rampe als Voll- oder Hohlkörper ausgebildet ist, zur Führung der Deckenschalung in Verschieberichtung (VR) aufweist, und ausgebildet ist, die Stirnseite (17, 17') der Deckenschalung (10) auf das Betonierniveau anhebend derart zu führen, dass die zweite Stützvorrichtung (12) von der Deckenschalung (10) überfahren werden kann, wobei bei der Stützvorrichtung (11, 12) das Auffahrschutzelement (15, 15') an einem der Deckenschalung (10) zugewandtem Ende der Stützvorrichtung (11, 12) ausgebildet ist.

17. Taktschiebevorrichtung mit zumindest der Anordnung nach Anspruch 14 oder Anspruch 16, wobei die Deckenschalung (10) mit einem Schalhautelement (6, 7), das zur Ausformung einer Unterseite (3U) einer Fahrbahnplatte (3) ausgebildet ist, versehen ist und die Stützvorrichtung (11, 12) als Fahrbahnplattenkonsole ausgeführt ist, wobei die Stützvorrichtung (11, 12) an einem der Deckenschalung (10) zugewandtem Ende einen Stützkopf (20A) umfasst, wobei der Stützkopf (20A) mit einer Rolle (50, 50') zur Anlage an einem Längsträger (4, 5) der Deckenschalung (10) versehen ist.

18. Taktschiebevorrichtung nach Anspruch 17, bei die Stützvorrichtung (11, 12) mit einer Absenkeinrichtung (20, 20') mit einem Hubkolben (14A), einer Stützbasis (18) und mit einer Arretiervorrichtung versehen ist, wobei der Hubkolben (14A) in der Stützbasis (18) verschiebbar gelagert ist und von der Einschalposition in die Ausschalposition einschiebbar ist und mittels der Arretiervorrichtung in der herausgeschobenen Arbeitsposition arretierbar ist, wobei die Arretiervorrichtung mit einem Drehlager (28) und einem Exzenterhebel (16) versehen ist, wobei der Exzenterhebel (16) in dem Drehlager (28) drehbar befestigt ist und der Hubkolben (14A) und die Stützbasis (18) in der Arbeitsposition (s.o.) über den Exzenterhebel (16) gegeneinander abgestützt sind, und die Stützbasis (18) und/oder der Hubkolben (14A) einenends den Stützkopf (20A) bilden.

## Claims

1. Method for displacing a ceiling formwork (10) into a next concreting cycle with a next concreting section (9) to be concreted, comprising the steps:
- arranging first (11) and second (12) support devices arranged along a displacement direction (VR), in particular on a side wall, for example of an edge area of a bridge trough, for supporting the ceiling formwork (10) below the next concreting section (9), which each have a formwork position (EP) and a formwork removal position (AP) as working positions, wherein, when the ceiling formwork (10) is supported by the support device (11-14) in the formwork position (EP), the ceiling formwork (10) is raised to a concreting level and, in the formwork removal position (AP), is lowered relative to the concreting level,
- shifting the first support device (11) into the formwork removal position (AP) and the second support device (12) arranged relative to the first support device (11) in the displacement direction (VR) into the formwork position (EP),
- arranging a collision protection element (15, 15') between the second support device (12) and a front side (17, 17') of the ceiling formwork (10) when the front side (17, 17') of the ceiling formwork (10) strikes the second support device (12) after passing over the first support device (11) (12), so that the collision protection element (15, 15') forms a flank (15a) rising in the displacement direction (VR) for guiding the ceiling formwork (10) in the displacement direction (VR), and
- raising the front side (17, 17') of the ceiling formwork (10) guided by the collision protection element (15, 15') to the concreting level, so that the second support device (12) is passed over by the ceiling formwork (10).

2. Method for displacing a ceiling formwork according to claim 1, wherein the ceiling formwork (10) is at least partially raised to the concrete level by displacing the ceiling formwork (10) into the next concreting cycle.

3. Method for displacing a ceiling formwork according to claim 1 or claim 2, wherein, after completion of the displacement of the ceiling formwork (10) into the next concreting cycle, the first support device (11) is shifted into the formwork position (EP) in order to raise the ceiling formwork (10) to the concreting level.

4. Method for displacing a ceiling formwork according to one of the preceding claims, wherein the ceiling formwork (10) is displaced from a first concreting cycle with a first concreted section (8) that is at least partially concreted into the next concreting cycle, wherein the next concreting section (9) is arranged adjacent to the first concreting section (8) in the displacement direction (VR), wherein
- a third support device (13) for supporting the ceiling formwork (10) is arranged in the direction opposite to the displacement direction (VR) adjacent to the first support device (11) below the first concreting section (8),
- the third support device (13) is shifted into the formwork removal position (AP),
- the ceiling formwork (10) is displaced by the ceiling formwork (10) first being supported at least partially by the third support device (13), then the first support device (11) and then the second support device (12) is passed over by the front side (17) of the ceiling formwork (10) in the displacement direction (VR), and
- the displacing of the ceiling formwork (10) into the next concreting section (9) is continued until a further front side (17') of the ceiling formwork (10), oriented in the direction opposite to the displacement direction (VR), is released by the third support device (13) or only an end section of the ceiling formwork (10) comprising the further front side (17') of the ceiling formwork (10) is supported by the third support device (13).

5. Method for displacing a ceiling formwork according to one of the preceding claims, wherein
- further support devices (14) are arranged in the displacement direction (VR) next to the second support device (12) and/or in the direction opposite to the displacement direction (VR) next to the first (11)/third (13) support device, and
- before displacing the ceiling formwork (10) into the next concreting section (9), the additional support devices arranged in the displacement direction (VR) next to the second support device (12) are shifted into the formwork position (EP) and/or the additional support devices (14) arranged in the direction opposite to the displacement direction (VR) next to the second support device (12) are shifted into the formwork removal position (AP).

6. Method for displacing a ceiling formwork according to one of the preceding claims, wherein
- the first and second support devices (11, 12) are arranged adjacent to one another, or
- at least one other support device is arranged between the first and second support devices (11, 12), wherein the other support device is shifted into the formwork removal position (AP) or into a position between the formwork removal position (AP) and the formwork position (EP).

7. Method for displacing a ceiling formwork according to one of the preceding claims, wherein the collision protection element (15, 15') is formed at the front side (17) of the ceiling formwork (10) in the displacement direction (VR) and/or at a/the further front side (17') of the ceiling formwork (10) in the direction opposite to the displacement direction (VR) with a flank (15a) rising in this direction.

8. Method for displacing a ceiling formwork according to claim 7, wherein a side of the collision prevention element (15, 15') adjacent to a lower edge of the front side (17) and/or the further front side (17') is arranged substantially flush with the lower edge of the front side (17) and/or the further front side (17') in order to ensure sliding or rolling of the ceiling formwork (10) on or over the support device (11-14).

9. Method for displacing a ceiling formwork according to one of the preceding claims, wherein the collision protection element (15, 15') is formed at one end of at least one of the support devices (11-14) facing the ceiling formwork (10).

10. Method for displacing a ceiling formwork according to one of the preceding claims, wherein the collision protection element (15, 15') is designed in a beak shape, wedge shape, skid shape or in the form of a ramp as a solid or hollow body.

11. Method for displacing a ceiling formwork according to one of the preceding claims, wherein the ceiling formwork (10) is provided with a formwork skin element (6, 7), which forms an underside (3U) of a roadway slab (3), and the support devices (11-14) are designed as roadway slab consoles.

12. Method for displacing a ceiling formwork according to claim 11, wherein the support device (11-14) forms a support head (20A) at one end facing the ceiling formwork (10), wherein the support head (20A) is provided with a roller (50, 50') for bearing against a longitudinal member (4, 5) of the ceiling formwork (10).

13. Method for displacing a ceiling formwork according to claim 12, wherein the support device (11-14) is provided with a lowering device (20, 20') with a reciprocating piston (14A), a support base (18) and a locking device, wherein the reciprocating piston (14A) is mounted in the support base (18) to be displaceable and is designed to be retractable from the formwork position into the formwork removal position and, by means of the locking device, is designed to be locked in the extended working position, wherein the locking device is provided with a pivot bearing (28) and an eccentric lever (16), wherein the eccentric lever (16) is rotatably mounted in the pivot bearing (28) and the reciprocating piston (14A) and the support base (18) are supported against each other in the working position (see above) via the eccentric lever (16), and the support base (18) and/or the reciprocating piston (14A) form the support head (20A) at one end.

14. Arrangement with first (11) and second (12) support devices, a ceiling formwork and a collision protection element (15, 15') for preventing a colliding of a front side (17, 17') of the ceiling formwork (10), wherein the ceiling formwork (10) is supported by the first support device (11) set in a formwork removal position (AP) with the second support device (12) set in a formwork position (EP) when the ceiling formwork (10) is displaced in a next concreting cycle with a next concreting section to be concreted (9), wherein the second supporting device (12) is arranged in the displacement direction (VR) of the ceiling formwork (10) relative to the first support device (11), wherein, when the ceiling formwork (10) is supported by the support device (11, 12) in the formwork position (EP), the ceiling formwork (10) is raised to a concreting level and, in the formwork removal position (AP), is lowered relative to the concreting level, wherein, when the front side (17, 17') of the ceiling formwork (10) strikes the second support device (12) after passing over the first support device (11), the collision protection element (15, 15') is arranged between the second support device (12) and a front side (17, 17') of the ceiling formwork (10) such that the collision protection element (15, 15') has a flank (15a) rising in the displacement direction (VR), which is designed, for example, in a beak shape, wedge shape, skid shape or in the form of a ramp as a solid or hollow body, for guiding the ceiling formwork in the displacement direction (VR), and is designed to guide the front side (17, 17') of the ceiling formwork (10) raising to the concreting level such that the second support device (12) can be passed over by the ceiling formwork (10), wherein the collision protection element (15, 15') is formed at the front side (17) of the ceiling formwork (10) in the displacement direction (VR) and/or at a further front side (17') of the ceiling formwork (10) in the direction opposite to the displacement direction (VR) with a flank (15a) rising in this direction.

15. Arrangement according to claim 14, wherein at the ceiling formwork a side of the collision protection element (15, 15') adjacent to a lower edge of the front side (17) and/or the further front side (17') is arranged essentially flush with the lower edge of the front side (17) and/or the further front side (17') in order to ensure sliding or rolling of the ceiling formwork (10) on or over the support device (11, 12).

16. Arrangement with first (11) and second (12) support devices, a ceiling formwork and a collision prevention element (15, 15') for preventing a front side (17, 17') of the ceiling formwork (10) from colliding, wherein the ceiling formwork (10) is supported by the first support device (11) set in a formwork removal position (AP), with the second support device (12) set in a formwork position (EP) when the ceiling formwork (10) is displaced into a next concreting cycle with a next concreting section (9) to be concreted, wherein the second support device (12) is arranged in the displacement direction (VR) of the ceiling formwork (10) relative to the first support device (11), wherein, when the ceiling formwork (10) is supported by the support device (11, 12) in the formwork position (EP), the ceiling formwork (10) is raised to a concreting level and, in the formwork removal position (AP), is lowered relative to the concreting level, wherein, when the front side (17, 17') of the ceiling formwork (10) strikes the second support device (12) after passing over the first support device (11), the collision protection element (15, 15') is arranged between the second support device (12) and a front side (17, 17') of the ceiling formwork (10) such that the collision protection element (15, 15') has a flank (15a) rising in the displacement direction (VR), which is designed, for example, in a beak shape, wedge shape, skid shape or in the form of a ramp as a solid or hollow body, for guiding the ceiling formwork in the displacement direction (VR), and is designed to guide the front side (17, 17') of the ceiling formwork (10) such that the second support device (12) can be passed over by the ceiling formwork (10), wherein at the support device (11, 12) the collision protection element (15, 15') is formed at an the end of the support device (11, 12) facing the ceiling formwork (10).

17. Clock shift device with at least the arrangement according to claim 14 or claim 16, wherein the ceiling formwork (10) is provided with a formwork skin element (6, 7) which is designed to form a lower side (3U) of a roadway slab (3) and the supporting device (11, 12) is designed as a roadway slab console, wherein the supporting device (11, 12) comprises a support head (20A) at an end facing the ceiling formwork (10), wherein the support head (20A) is provided with a roller (50, 50') for bearing against a longitudinal member (4, 5) of the ceiling formwork (10).

18. Clock shift device according to claim 17, wherein the support device (11, 12) is provided with a lowering device (20, 20') with a reciprocating piston (14A), a support base (18) and a locking device, wherein the reciprocating piston (14A) is mounted in the support base (18) to be displaceable and is retractable from the formwork position into the formwork removal position and is lockable in the extended working position by means of the locking device, wherein the locking device is provided with a pivot bearing (28) and an eccentric lever (16), wherein the eccentric lever (16) is rotatably mounted in the pivot bearing (28) and the reciprocating piston (14A) and the support base (18) are supported against each other in the working position (see above) via the eccentric lever (16), and the support base (18) and/or the reciprocating piston (14A) form the support head (20A) at one end.

## Revendications

1. Procédé pour déplacer un coffrage de plafond (10) à un cycle de coulage de béton suivant avec une section de bétonnage suivante (9) à bétonner, comprenant les étapes suivantes :
- Agencement de premiers (11) et seconds (12) dispositifs de support disposés le long d'une direction de déplacement (VR), en particulier sur une paroi latérale, par exemple d'une zone de bord d'un pont en auge, pour supporter le coffrage de plafond (10) en dessous de la section de bétonnage suivante (9), qui ont chacune une position de coffrage (EP) et une position de décoffrage (AP) comme positions de travail, lorsque le coffrage de plafond (10) étant supporté par le dispositif de support (11-14) est relevé à un niveau de bétonnage en position de coffrage (EP) et en position de décoffrage (AP) est abaissé par rapport au niveau de bétonnage,
- Déplacement du premier dispositif de support (11) en position de décoffrage (AP) et du deuxième dispositif de support (12) disposé par rapport au premier dispositif de support (11) dans la direction de déplacement (VR) en position de coffrage (EP),
- Disposition d'un élément protecteur anti-collision (15, 15') entre le deuxième dispositif de support (12) et une face frontale (17, 17') du coffrage de plafond (10) lorsque la face frontale (17, 17') du coffrage de plafond (10) heurte le deuxième dispositif de support (12) après avoir dépassé le premier dispositif de support (11) lorsque la face frontale (17, 17') du coffrage de plafond (10) heurte le deuxième dispositif de support (12) après avoir dépassé le premier dispositif de support (11), de sorte que l'élément protecteur anti-collision (15, 15') forme un flanc (15a) s'élevant dans la direction de déplacement (VR) pour guider le coffrage de plafond (10) dans la direction de déplacement (VR), et
- Soulèvement de la face frontale (17, 17') du coffrage de plafond (10) guidée par l'élément protecteur anti-collision (15, 15') jusqu'au niveau de bétonnage, de sorte que le deuxième dispositif de support (12) soit franchi par le coffrage de plafond (10).

2. Procédé pour déplacer un coffrage de plafond selon la revendication 1, par lequel le coffrage de plafond (10) est au moins partiellement soulevé jusqu'au niveau du bétonnage en déplaçant le coffrage de plafond (10) au cycle de bétonnage suivant.

3. Procédé pour déplacer un coffrage de plafond selon la revendication 1 ou la revendication 2, par lequel, après l'achèvement du déplacement du coffrage de plafond (10) au cycle de bétonnage suivant, le premier dispositif de support (11) est déplacé en position de coffrage (EP) afin de soulever le coffrage de plafond (10) jusqu'au niveau de bétonnage.

4. Procédé pour déplacer un coffrage de plafond selon l'une des revendications précédentes, par lequel le coffrage de plafond (10) est déplacé d'un premier cycle de bétonnage avec une première section au moins partiellement bétonnée (8) vers le cycle de bétonnage suivant, dans lequel la section de bétonnage suivante (9) est disposée de manière adjacente à la première section de bétonnage (8) dans la direction de déplacement (VR), lorsqu'
- un troisième dispositif de support (13) pour supporter le coffrage de plafond (10) est disposé dans la direction opposée à la direction de déplacement (VR) à côté du premier dispositif de support (11) sous la première section bétonnée (8),
- le troisième dispositif de support (13) est déplacé en position de décoffrage (AP),
- le coffrage de plafond (10) est déplacé, en étant d'abord soutenu au moins partiellement par le troisième dispositif de support (13) après que le premier dispositif de support (11) et ensuite le deuxième dispositif de support (12) est franchi par la face frontal (17) du coffrage de plafond (10) dans la direction de déplacement (VR), et
- le déplacement du coffrage de plafond (10) dans la section de coulage de béton suivante (9) est continué jusqu'à ce qu'une face frontale supplémentaire (17') du coffrage de plafond (10), orientée dans la direction opposée à la direction de déplacement (VR), est libérée par le troisième dispositif de support (13) ou seule une section d'extrémité du coffrage de plafond (10) comprenant la face frontale supplémentaire (17') du coffrage de plafond (10) est supportée par le troisième dispositif de support (13).

5. Procédé pour déplacer un coffrage de plafond selon l'une des revendications précédentes, par lequel
- de dispositifs de support supplémentaires (14) sont disposés dans la direction de déplacement (VR) à côté du deuxième dispositif de support (12) et/ou dans la direction opposée à la direction de déplacement (VR) à côté du premier (11)/troisième (13) dispositif de support, et
- avant de déplacer le coffrage de plafond (10) dans la section de bétonnage suivante (9), les dispositifs de support supplémentaires disposés dans la direction de déplacement (VR) à côté du deuxième dispositif de support (12) sont déplacés en position de coffrage (EP) et/ou les dispositifs de support supplémentaires (14) disposés dans la direction opposée à la direction de déplacement (VR) à côté du deuxième dispositif de support (12) sont déplacés en position de décoffrage (AP).

6. Procédé pour déplacer un coffrage de plafond selon l'une des revendications précédentes, par lequel
- les premiers et deuxièmes dispositifs de support (11, 12) sont disposés l'un à côté de l'autre, ou
- au moins un autre dispositif de support est disposé entre les premiers et deuxièmes dispositifs de support (11, 12), pendant que l'autre dispositif de support est déplacé en position de décoffrage (AP) ou dans une position entre décoffrage (AP) et coffrage (EP).

7. Procédé pour déplacer un coffrage de plafond selon l'une des revendications précédentes, par lequel l'élément protecteur anti-collision (15, 15') est disposé dans la direction de déplacement (VR) sur la face frontale (17) du coffrage de plafond (10) et/ou sur une face frontale supplémentaire (17') du coffrage de plafond (10) dans la direction opposée à la direction de déplacement (VR) avec un flanc (15a) s'élevant dans cette direction.

8. Procédé pour déplacer un coffrage de plafond selon la revendication 7, par lequel un côté de l'élément protecteur anti-collision (15, 15') adjacent à un bord inférieur de la face frontale (17) et/ou de la face frontale supplémentaire (17') est disposé essentiellement à fleur du bord inférieur de la face frontale (17) et/ou de la face a frontale supplémentaire (17') afin d'assurer le glissement ou le roulement du coffrage de plafond (10) sur ou au-dessus du dispositif de support (11-14).

9. Procédé pour déplacer un coffrage de plafond selon l'une des revendications précédentes, par lequel l'élément protecteur anti-collision (15, 15') est formé sur une extrémité d'au moins l'un des dispositifs de support (11-14) tourné vers le coffrage de plafond (10).

10. Procédé pour déplacer un coffrage de plafond selon l'une des revendications précédentes, par lequel l'élément protecteur anti-collision (15, 15') est conçu en forme de bec, de coin, de patin ou de rampe, sous la forme d'un corps plein ou creux.

11. Procédé pour déplacer un coffrage de plafond selon l'une des revendications précédentes, par lequel le coffrage de plafond (10) est muni d'un élément de peau de coffrage (6, 7) qui forme une face inférieure (3U) d'une dalle de chaussée (3), et les dispositifs de support (11-14) sont conçus comme des consoles de tablier de chaussée.

12. Procédé pour déplacer un coffrage de plafond selon la revendication 11, par lequel le dispositif de support (11-14) forme une tête de support (20A) à une extrémité tournée vers le coffrage de plafond (10), la tête de support (20A) étant pourvue d'un rouleau (50, 50') destiné à s'appuyer contre un élément longitudinal (4, 5) du coffrage de plafond (10).

13. Procédé pour déplacer un coffrage de plafond selon la revendication 12, par lequel le dispositif de support (11-14) est muni d'un dispositif d'abaissement (20, 20') avec un piston alternatif (14A), une base de support (18) et un dispositif de verrouillage, le piston alternatif (14A) étant monté dans la base de support (18) de manière à pouvoir être déplacé et est conçu pour être poussé de la position de coffrage en position de décoffrage et, au moyen du dispositif de verrouillage, est conçu pour être verrouillé dans la position de travail étendue, en munissant le dispositif de verrouillage d'un palier pivotant (28) et d'un levier excentrique (16), et en montant le levier excentrique (16) de manière rotative dans le palier pivotant (28), et le piston alternatif (14A) et la base d'appui (18) s'appuient l'un contre l'autre dans la position de travail (voir ci-dessus) par l'intermédiaire du levier excentrique (16), et la base d'appui (18) et/ou le piston alternatif (14A) forment la tête d'appui (20A) à une extrémité.

14. Disposition comprenant de premiers (11) et deuxièmes (12) dispositifs de support, un coffrage de plafond et un élément protecteur anti-collision (15, 15') destiné à éviter une collision d'une face avant (17, 17') du coffrage de plafond (10), supportant le coffrage de plafond (10) sur le premier dispositif de support (11) placé dans une position de décoffrage (AP), avec le deuxième dispositif de support (12) placé dans une position de coffrage (EP) lorsque le coffrage de plafond (10) est déplacé dans un cycle de bétonnage suivant avec une section de bétonnage suivante à bétonner (9), en disposant le deuxième dispositif de support (12) dans la direction de déplacement (VR) du coffrage de plafond (10) par rapport au premier dispositif de support (11), et lorsque le coffrage de plafond (10) est supporté par les dispositifs de support (11, 12) en position de coffrage (EP), le coffrage de plafond (10) est relevé jusqu'à un niveau de bétonnage et, en position de décoffrage (AP), est abaissé par rapport au niveau de bétonnage, et, lorsque la face frontale (17, 17') du coffrage de plafond (10) heurte le deuxième dispositif de support (12) après avoir dépassé le premier dispositif de support (11), l'élément protecteur anti-collision (15, 15') est disposé entre le deuxième dispositif de support (12) et une face frontale (17, 17') du coffrage de plafond (10) de telle sorte que l'élément protecteur anti-collision (15, 15') présente un flanc (15a) s'élevant dans la direction de déplacement (VR), qui est conçu, par exemple en forme de bec, de coin, de patin ou de rampe, sous forme de corps plein ou creux, pour guider le coffrage de plafond dans la direction de déplacement (VR), et est conçu pour guider la face frontale (17, 17') du coffrage de plafond (10) de telle sorte que le deuxième dispositif de support (12) puisse être franchi par le coffrage de plafond (10), dans lequel l'élément protecteur anti-collision (15, 15') est disposé sur la face frontale (17) du coffrage de plafond (10) dans la direction de déplacement (VR) et/ou sur une face frontale supplémentaire (17') du coffrage de plafond (10) dans la direction opposée à la direction de déplacement (VR) avec un flanc (15a) s'élevant dans cette direction.

15. Disposition selon la revendication 14, par laquelle, au coffrage de plafond, un côté de l'élément protecteur anti-collision (15, 15') adjacent à un bord inférieur de la face avant (17) et/ou de la face avant supplémentaire (17') est disposé essentiellement à fleur du bord inférieur de la face avant (17) et/ou de la face avant supplémentaire (17') afin d'assurer le glissement ou le roulement du coffrage de plafond (10) sur ou au-dessus du dispositif de support (11, 12).

16. Disposition comprenant de premiers (11) et deuxièmes (12) dispositifs de support, un coffrage de plafond et un élément anti-collision (15, 15') destiné à éviter une collision d'une face frontale (17, 17') du coffrage de plafond (10), le coffrage de plafond (10) étant supporté par le premier dispositif de support (11) placé en position de décoffrage (AP), avec le deuxième dispositif de support (12) placé dans une position de coffrage (EP) lorsque le coffrage de plafond (10) est déplacé dans un cycle de bétonnage suivant avec une section de bétonnage suivante (9) à bétonner, et, le deuxième dispositif de support (12) est disposé dans la direction de déplacement (VR) du coffrage de plafond (10) vers le premier dispositif de support (11), et, lorsque le coffrage de plafond (10) est supporté par le dispositif de support (11, 12) en position de coffrage (EP), le coffrage de plafond (10) est relevé jusqu'à un niveau de bétonnage et, dans la position de décoffrage (AP), est abaissé par rapport au niveau de bétonnage, et lorsque la face frontale (17, 17') du coffrage de plafond (10) heurtant le deuxième dispositif de support (12) après avoir dépassé le premier dispositif de support (11), l'élément protecteur anti-collision (15, 15') est disposé entre le deuxième dispositif de support (12) et une face frontale (17, 17') du coffrage de plafond (10) de telle sorte que l'élément protecteur anti-collision (15, 15') présente un flanc (15a) s'élevant dans la direction de déplacement (VR), qui est conçu, par exemple en forme de bec, de coin, de patin ou de rampe, sous forme de corps plein ou creux, pour guider le coffrage de plafond dans la direction de déplacement (VR), et est conçu pour guider la face frontale (17, 17') du coffrage de plafond (10) de telle sorte que le deuxième dispositif de support (12) puisse être franchi par le coffrage de plafond (10), et l'élément protecteur anti-collisions (15, 15') étant formé au dispositif de support (11, 12) à une extrémité du dispositif de support (11, 12) tournée vers le coffrage de plafond (10).

17. Dispositif de glissement cyclique avec au moins l'agencement selon la revendication 14 ou la revendication 16, par lequel le coffrage de plafond (10) est muni d'un élément de peau de coffrage (6, 7) qui est formé pour former une face inférieure (3U) d'une dalle de chaussée (3) et le dispositif de support (11, 12) est conçu comme un support de dalle de chaussée, et le dispositif de support (11, 12) comprenant une tête d'appui (20A) à une extrémité tournée vers le coffrage de plafond (10) (20A) à une extrémité tournée vers le coffrage de plafond (10), la tête d'appui (20A) étant pourvue d'un rouleau (50, 50') destiné à s'appuyer contre un élément longitudinal (4, 5) du coffrage de plafond (10).

18. Dispositif de glissement cyclique selon la revendication 17, par lequel le dispositif de support (11, 12) est muni d'un dispositif d'abaissement (20, 20') avec un piston alternatif (14A), une base de support (18) et un dispositif de verrouillage, dans lequel le piston alternatif (14A) est monté dans la base de support (18) de manière à pouvoir être déplacé et peut être poussé de la position de coffrage en position de décoffrage et peut être verrouillé dans la position de travail étendue au moyen du dispositif de verrouillage, dans lequel le dispositif de verrouillage est muni d'un palier pivotant (28) et d'un levier excentrique (16), dans lequel le levier excentrique (16) est monté de manière rotative dans le palier pivotant (28) et le piston à mouvement alternatif (14A) et la base de support (18) sont appuyés l'un contre l'autre dans la position de travail (voir ci-dessus) par l'intermédiaire du levier excentrique (16), et la base de support (18) et/ou le piston alternatif (14A) forment la tête de support (20A) à une extrémité.
